# EUROPEAN PATENT APPLICATION

(11) **EP 4 206 987 A1**
(43) Date of publication of application: **05.07.2023**
(21) Application number: 20956522.5
(22) Date of filing: 09.10.2020
(51) Int. Cl.: G06N 3/04

(54) **MODEL EVALUATION METHOD AND APPARATUS**

(71) Applicant: Huawei Technologies Co., Ltd., Shenzhen, Guangdong 518129 (CN)
(72) Inventor: YANG, Shuigen, Shenzhen, Guangdong 518129 (CN); JIN, Yinghao, Shenzhen, Guangdong 518129 (CN); QIN, Dongrun, Shenzhen, Guangdong 518129 (CN)
(74) Representative: Goddar, Heinz J.
(86) International application number: PCT/CN2020/120034
(87) International publication number: WO 2022/073207

(57) **Abstract**

A model evaluation method and apparatus are provided, to resolve a problem that evaluation is inaccurate when a same preset data set is used for both model evaluation and model training, thereby improving model evaluation accuracy and efficiency. The model evaluation method and apparatus may be applied to systems such as 5G and V2X. The method includes: An inference device determines an inference output of a machine learning model based on an inference input of the machine learning model, where the machine learning model is determined based on first configuration information; the inference device sends a first message to a measurement device, where the first message includes a measurement object, the measurement object is determined based on the inference output, and the first message is used to request a measurement result of the measurement object; the inference device receives the measurement result from the measurement device, where the measurement result corresponds to the inference output; and the inference device sends an evaluation result to an update device, where the evaluation result is determined based on the inference output and the measurement result.

## Description

### TECHNICAL FIELD

This application relates to the communication field, and in particular, to a model evaluation method and apparatus.

### BACKGROUND

Currently, with development of artificial intelligence (artificial intelligence, Al) technologies and machine learning (machine learning, ML) technologies, AI/ML plays an increasingly important role in a wireless communication network. Currently, in a wireless communication network, AI/ML is introduced in fields such as a physical layer, media access control, radio resource control, radio resource management, and operation and maintenance between a terminal device and a network side. AI/ML usually includes the following three parts: ML model training (training), ML model inference (inference), and ML model evaluation (evaluation). The ML model training is mainly used to perform learning based on a training data set, to obtain an ML model that can execute a specific task, for example, obtain a weight matrix of the ML model. The ML model inference is mainly used to determine an inference output corresponding to an inference input based on the ML model. The ML model evaluation is mainly used to evaluate a generalization (generalization) capability of the ML model based on an evaluation data set, that is, a capability of applying to a new data set by the ML model.

However, the training data set and the evaluation data set usually belong to a same preset data set. Therefore, even if an evaluation result of the ML model is accurate, it cannot be ensured that the ML model is applicable to other data than the preset data set. To be specific, when the ML model is used to perform inference for the other data, an obtained inference output may be inaccurate. In other words, when an ML model is trained and evaluated based on a same preset data set, there is a problem that an evaluation result of the ML model is inaccurate, and consequently a generalization capability of the ML model is insufficient.

### SUMMARY

Embodiments of this application provide a model evaluation method and apparatus, to resolve a problem that an evaluation result of an ML model is inaccurate when the ML model is trained and evaluated based on a same preset data set, so that model evaluation accuracy and efficiency can be improved.

To achieve the foregoing objective, this application uses the following technical solutions.

According to a first aspect, a model evaluation method is provided. The model evaluation method includes: An inference device determines an inference output of a machine learning model based on an inference input of the machine learning model. The machine learning model is determined based on first configuration information. The inference device sends a first message to a measurement device. The first message includes a measurement object or the inference output. The measurement object is determined based on the inference output, and the first message is used to request a measurement result of the measurement object. The inference device receives the measurement result from the measurement device. The measurement result corresponds to the inference output. The inference device sends an evaluation result to an update device. The evaluation result is determined based on the inference output and the measurement result.

Based on the model evaluation method according to the first aspect, the inference device may determine, by comparing the inference output of the machine learning model with an actual measurement result corresponding to the inference output, whether the machine learning model can obtain an accurate output based on data in an actual scenario. In this way, the inference device can accurately evaluate a generalization capability of the machine learning model, to resolve a problem that evaluation is inaccurate when a same preset data set is used for both model evaluation and model training, thereby improving model evaluation accuracy and efficiency.

In addition, the inference device and the update device respectively perform evaluation and update for the machine learning model, so that when there are a plurality of inference devices, it can be ensured that each inference device can evaluate a locally deployed machine learning model in a timely manner, thereby reducing data processing pressure of the update device. Therefore, the machine learning model can be quickly updated based on the evaluation result, so that machine learning model update efficiency is improved. In addition, workload of all parties can be balanced through cooperation of the inference device and the update device, to ensure that resources in the inference device and the update device can be properly allocated, thereby improving efficiency of evaluating the machine learning model. Further, the resources in the inference device and the update device are properly allocated, so that the inference device and the update device can use remaining resources to perform other tasks, thereby improving network resource utilization and overall working efficiency.

Optionally, the evaluation result may include accuracy of the machine learning model. In this way, the inference device may determine the accuracy of the machine learning model based on a plurality of inference outputs and corresponding measurement results, so that the update device updates the machine learning model by using the accuracy, to improve the generalization capability of the machine learning model.

Optionally, the measurement result may be included in a second message. The second message may further include a transaction identifier, and the transaction identifier corresponds to the measurement result. In this way, the inference device can quickly determine, based on the transaction identifier in the second message, the measurement result corresponding to the inference output, to further improve evaluation efficiency of the machine learning model.

Optionally, the evaluation result may be carried in a third message, and the third message may further include the inference input and the measurement result. In this way, the update device may construct a verification data set based on the inference input and the measurement result, to update configuration information of the machine learning model based on the verification data set, thereby further improving the generalization capability of the machine learning model.

In a possible design solution, the inference device may be a source access network device, the measurement device may be a target access network device, and the update device may be a network device, for example, a core network element. Correspondingly, that the inference device sends a first message to a measurement device may include: The source access network device sends the first message to the target access network device. That the inference device receives the measurement result from the measurement device may include: The source access network device receives the measurement result from the target access network device. That the inference device sends an evaluation result to an update device may include: The source access network device sends the evaluation result to the network device. In this way, in a scenario in which a terminal device is handed over from the source access network device to the target access network device, the source access network device, the target access network device, and the network device cooperate to complete model evaluation and model update, so that model evaluation efficiency can be improved, and workload of the devices can be balanced. In addition, resources occupied by evaluation in the devices are properly allocated, so that the devices can use remaining resources to perform other communication tasks, thereby improving network resource utilization and overall working efficiency.

In another possible design solution, the inference device may be an access network device, the measurement device may be a terminal device, and the update device may be a network device, for example, a core network element. Correspondingly, that the inference device sends a first message to a measurement device may include: The access network device sends the first message to the terminal device. That the inference device receives the measurement result from the measurement device may include: The access network device receives the measurement result from the terminal device. That the inference device sends an evaluation result to an update device may include: The access network device sends the evaluation result to the network device. In this way, in a scenario in which the terminal device communicates with the access network device, the access network device, the terminal device, and the network device cooperate to complete model evaluation and model update, so that model evaluation efficiency can be improved, and workload of the devices can be balanced. In addition, resources occupied by evaluation in the devices are properly allocated, so that the devices can use remaining resources to perform other communication tasks, thereby improving network resource utilization and overall working efficiency.

According to a second aspect, a model evaluation method is provided. The model evaluation method includes: A measurement device receives a first message from an inference device. The first message may include a measurement object or an inference output of a machine learning model. The inference output is used to determine the measurement object. The measurement device sends a measurement result to the inference device. The measurement result is determined based on the measurement object. In this way, the measurement device may determine the measurement object that needs to be measured, and then return, to the inference device, the measurement result obtained through actual measurement, so that the inference device accurately evaluates a generalization capability of the machine learning model based on the measurement result and the corresponding inference output, thereby improving model evaluation accuracy and efficiency.

Optionally, the measurement result may be carried in a second message, and the second message may further include a transaction identifier. The transaction identifier corresponds to the measurement result.

In a possible design solution, the measurement device may be a target access network device, and the inference device may be a source access network device. Correspondingly, that a measurement device receives a first message from an inference device may include: The target access network device receives the first message from the source access network device. That the measurement device sends a measurement result to the inference device may include: The target access network device sends the measurement result to the source access network device.

In another possible design solution, the measurement device may be a terminal device, and the inference device may be an access network device. Correspondingly, that a measurement device receives a first message from an inference device may include: The terminal device receives the first message from the access network device. That the measurement device sends a measurement result to the inference device may include: The terminal device sends the measurement result to the access network device.

In addition, for technical effects of the model evaluation method in the second aspect, refer to the technical effects of the model evaluation method in the first aspect. Details are not described herein again.

According to a third aspect, a model evaluation method is provided. The model evaluation method includes: An update device receives an evaluation result of a machine learning model from an inference device. The update device determines second configuration information of the machine learning model based on the evaluation result. In this way, the update device can quickly determine, based on the evaluation result from the inference device, whether the machine learning model needs to be updated, so as to determine a second configuration file of the machine learning model in a timely manner to perform model update.

Optionally, the evaluation result may include accuracy of the machine learning model, and the accuracy is used to determine the second configuration information. In this way, the update device can further quickly determine, based on the accuracy of the machine learning model, whether the machine learning model needs to be updated, so that machine learning model update efficiency is improved.

Optionally, the evaluation result may be carried in a third message. The third message may further include an inference input and a measurement result, and the inference input and the measurement result are used to determine the second configuration information. In this way, the update device can retrain the machine learning model by using a verification data set, that is, the inference input and the measurement result, to obtain the corresponding second configuration information, so that the inference device improves a generalization capability of the machine learning model based on the second configuration information.

In a possible design solution, the update device may be a network device, for example, a core network element, and the inference device may be a source access network device. Correspondingly, that an update device receives an evaluation result of a machine learning model from an inference device may include: The network device receives the evaluation result from the source access network device.

In another possible design solution, the update device may be a network device, for example, a core network element, and the inference device may be an access network device. Correspondingly, that an update device receives an evaluation result of a machine learning model from an inference device may include: The network device receives the evaluation result from the access network device.

In addition, for technical effects of the model evaluation method in the third aspect, refer to the technical effects of the model evaluation method in the first aspect. Details are not described herein again.

According to a fourth aspect, a model evaluation method is provided. The model evaluation method includes: An inference device determines an inference output of a machine learning model based on an inference input of the machine learning model. The machine learning model is determined based on third configuration information. The inference device sends a fourth message to a measurement device. The fourth message may include the inference output.

Based on the model evaluation method according to the fourth aspect, the inference device may send the inference output of the machine learning model to the measurement device, so that the measurement device determines, by comparing the inference output with an actual measurement result corresponding to the inference output, whether the machine learning model can obtain an accurate output based on new data in an actual scenario. In this way, the measurement device can accurately evaluate a generalization capability of the machine learning model, to resolve a problem that evaluation is inaccurate when a same preset data set is used for both model evaluation and model training, thereby improving model evaluation accuracy and efficiency.

In addition, the measurement device and an update device respectively perform evaluation and update for the machine learning model, so that when there are a plurality of measurement devices, it can be ensured that each measurement device can evaluate, in a timely manner, a machine learning model deployed in a corresponding inference device, thereby reducing data processing pressure of the update device. Therefore, the machine learning model can be quickly updated based on an evaluation result, so that machine learning model update efficiency is improved. In addition, workload of all parties can be balanced through cooperation of the measurement device and the update device, to ensure that resources in the measurement device and the update device can be properly allocated, thereby improving efficiency of evaluating the machine learning model. Further, the resources in the measurement device and the update device are properly allocated, so that the measurement device and the update device can use remaining resources to perform other tasks, thereby improving network resource utilization and overall working efficiency.

Optionally, the fourth message may further include the inference input. In this way, the inference device can send the inference input to the measurement device, so that the measurement device sends the inference input and a measurement result to the update device, and the update device may construct a verification data set based on the inference input and the measurement result, to update configuration information of the machine learning model based on the verification data set, thereby further improving the generalization capability of the machine learning model.

In a possible design solution, the inference device may be a source access network device, and the measurement device may be a target access network device. Correspondingly, that the inference device sends a fourth message to a measurement device may include: The source access network device sends the fourth message to the target access network device. In this way, in a scenario in which a terminal device is handed over from the source access network device to the target access network device, the source access network device and the target access network device cooperate to complete model evaluation, so that model evaluation efficiency can be improved, and workload of the devices can be balanced. In addition, resources occupied by evaluation in the devices are properly allocated, so that the devices can use remaining resources to perform other communication tasks, thereby improving network resource utilization and overall working efficiency.

According to a fifth aspect, a model evaluation method is provided. The model evaluation method includes: A measurement device receives a fourth message from an inference device. The fourth message may include an inference output of a machine learning model, and the inference output is used to determine a measurement object. The measurement device sends an evaluation result to an update device. The evaluation result is determined based on the inference output and a measurement result, the measurement result is determined based on the measurement object, and the measurement result corresponds to the inference output. In this way, the measurement device determines, by comparing the inference output with an actual measurement result corresponding to the inference output, whether the machine learning model can obtain an accurate output based on new data in an actual scenario, to accurately evaluate a generalization capability of the machine learning model. This can resolve a problem that evaluation is inaccurate when a same preset data set is used for both model evaluation and model training, so that model evaluation accuracy and efficiency are improved.

Optionally, the evaluation result may include accuracy of the machine learning model. In this way, the measurement device may determine the accuracy of the machine learning model based on a plurality of inference outputs and corresponding measurement results, so that the update device updates the machine learning model by using the accuracy, to improve the generalization capability of the machine learning model.

Optionally, the evaluation result may be carried in a fifth message, the fourth message may further include an inference input of the machine learning model, and the fifth message may further include the inference input and the measurement result.

In a possible design solution, the measurement device may be a target access network device, the inference device may be a source access network device, and the update device may be a network device, for example, a core network element. Correspondingly, that a measurement device receives a fourth message from an inference device may include: The target access network device receives the fourth message from the source access network device. That the measurement device sends an evaluation result to an update device may include: The target access network device sends the evaluation result to the network device. In this way, the source access network device, the target access network device, and the network device cooperate to complete model evaluation and model update, so that model evaluation efficiency can be improved, and workload of the devices can be balanced. In addition, resources occupied by evaluation in the devices are properly allocated, so that the devices can use remaining resources to perform other communication tasks, thereby improving network resource utilization and overall working efficiency.

In addition, for technical effects of the model evaluation method in the fifth aspect, refer to the technical effects of the model evaluation method in the fourth aspect. Details are not described herein again.

According to a sixth aspect, a model evaluation method is provided. The model evaluation method includes: An update device receives an evaluation result of a machine learning model from a measurement device. The update device determines fourth configuration information of the machine learning model based on the evaluation result. In this way, the update device can quickly determine, based on the evaluation result from an inference device, whether the machine learning model needs to be updated, so as to determine a fourth configuration file of the machine learning model in a timely manner to perform model update.

Optionally, the evaluation result may include accuracy of the machine learning model, and the accuracy is used to determine the fourth configuration information. In this way, the update device can further quickly determine, based on the accuracy of the machine learning model, whether the machine learning model needs to be updated, so that machine learning model update efficiency is improved.

Optionally, the evaluation result may be carried in a fifth message. The fifth message may further include an inference input and a measurement result, and the inference input and the measurement result are used to determine the fourth configuration information. In this way, the update device can retrain the machine learning model by using a verification data set, that is, the inference input and the measurement result, to obtain the corresponding fourth configuration information, so that the inference device improves a generalization capability of the machine learning model based on the fourth configuration information.

In a possible design solution, the update device may be a network device, for example, a core network element, and the measurement device may be a target access network device. Correspondingly, that an update device receives an evaluation result of a machine learning model from a measurement device may include: The network device receives the evaluation result from the target access network device.

In addition, for technical effects of the model evaluation method in the sixth aspect, refer to the technical effects of the model evaluation method in the fourth aspect. Details are not described herein again.

According to a seventh aspect, a model evaluation method is provided. The model evaluation method includes: An inference device determines an inference output of a machine learning model based on an inference input of the machine learning model. The machine learning model is determined based on fifth configuration information. The inference device sends the inference output to an update device. The inference device sends a sixth message to a measurement device. The sixth message may include the inference output or a measurement object, the measurement object is determined based on the inference output, and the sixth message is used to request a measurement result of the measurement object.

Based on the model evaluation method according to the seventh aspect, the inference device may send the inference output of the machine learning model to the update device, so that the update device determines, by comparing the inference output with an actual measurement result corresponding to the inference output, whether the machine learning model can obtain an accurate output based on new data in an actual scenario. In this way, the update device accurately evaluates a generalization capability of the machine learning model, to resolve a problem that evaluation is inaccurate when a same preset data set is used for both model evaluation and model training, thereby improving model evaluation accuracy and efficiency.

It should be noted that the inference device may send the sixth message and the inference output in a plurality of manners. The inference device may directly send the inference output to the update device, and send, to the measurement device, the sixth message that carries the measurement object. Alternatively, the inference device may send the inference output and the measurement result to the update device, and send, to the measurement device, the sixth message that carries the measurement object. Alternatively, the inference device may not communicate with the update device, but only send, to the measurement device, the sixth message that carries the inference output, and then the measurement device sends the inference output and the measurement result to the update device, so that the update device may perform model evaluation based on the inference output and the corresponding measurement result.

In a possible design solution, that the inference device sends the inference output to an update device may include: The inference device sends a seventh message to the update device. The seventh message may include the inference output. In this way, the inference device and the measurement device may respectively send the inference output and the measurement result to the update device, so that workload of the inference device and the measurement device can be balanced through cooperation of the two parties. This ensures that resources in the inference device and the measurement device can be properly allocated, so that efficiency of evaluating the machine learning model can be improved.

Optionally, the sixth message may further include a transaction identifier, the seventh message may further include the transaction identifier, and the transaction identifier corresponds to the inference output. In this way, the update device can quickly determine, based on the transaction identifier in the seventh message, the measurement result corresponding to the inference output, to further improve evaluation efficiency of the machine learning model.

Optionally, the seventh message may further include the inference input. In this way, the update device may construct a verification data set based on the inference input and the measurement result, to update configuration information of the machine learning model based on the verification data set, thereby further improving the generalization capability of the machine learning model.

In another possible design solution, the model evaluation method according to the seventh aspect may further include: The inference device receives the measurement result from the measurement device. Correspondingly, that the inference device sends the inference output to an update device may include: The inference device sends an eighth message to the update device. The eighth message includes the inference output and the measurement result. In this way, the inference device may send the inference output and the measurement result to the update device in a unified manner, and the measurement device and a network device do not need to communicate with each other. Therefore, network resources of the measurement device and the update device can be saved, and model evaluation efficiency can be improved.

Optionally, the eighth message may further include the inference input. In this way, the update device may construct a verification data set based on the inference input and the measurement result, to update configuration information of the machine learning model based on the verification data set, thereby further improving the generalization capability of the machine learning model.

Optionally, the sixth message may further include the inference input. In this way, the inference device sends the inference input to the measurement device, and the measurement device sends the inference input and the measurement result to the update device, so that the update device may construct a verification data set based on the inference input and the corresponding measurement result, to update configuration information of the machine learning model based on the verification data set, thereby further improving the generalization capability of the machine learning model.

In a possible design solution, the inference device may be a source access network device, the update device may be a network device such as a core network element, and the measurement device may be a target access network device. Correspondingly, that the inference device sends a seventh message to the update device may include: The source access network device sends the seventh message to the network device. That the inference device sends a sixth message to a measurement device may include: The source access network device sends the sixth message to the target access network device. In this way, in a scenario in which a terminal device is handed over from the source access network device to the target access network device, the source access network device and the target access network device respectively send the inference output and the measurement result to the network device, and the network device performs model evaluation and model update in a unified manner, so that workload of the source access network device and the target access network device can be balanced, and the workload of the source access network device and the target access network device can be alleviated. Therefore, the source access network device and the target access network device can use remaining resources to perform other communication tasks, so that network resource utilization is improved.

In another possible design solution, the inference device may be an access network device, the update device may be a network device such as a core network element, and the measurement device may be a terminal device. Correspondingly, that the inference device sends a seventh message to the update device may include: The access network device sends the seventh message to the network device. That the inference device sends a sixth message to a measurement device may include: The access network device sends the sixth message to the terminal device. In this way, in a scenario in which the terminal device communicates with the access network device, the access network device and the terminal device respectively send the inference output and the measurement result to the network device, and the network device performs model evaluation and model update in a unified manner, so that workload of the access network device and the terminal device can be balanced. Therefore, the access network device and the terminal device can use remaining resources to perform other communication tasks, so that network resource utilization is improved.

In another possible design solution, the inference device may be a source access network device, the update device may be a network device such as a core network element, and the measurement device may be a target access network device. Correspondingly, that the inference device sends an eighth message to the update device may include: The source access network device sends the eighth message to the network device. That the inference device sends a sixth message to a measurement device may include: The source access network device sends the sixth message to the target access network device. In this way, in a scenario in which a terminal device is handed over from the source access network device to the target access network device, the source access network device may send the inference output and the measurement result to the network device in a unified manner, and the network device performs model evaluation and model update in a unified manner, so that workload of the target access network device can be further alleviated. Therefore, the source access network device and the target access network device can use remaining resources to perform other communication tasks, so that network resource utilization is further improved.

In another possible design solution, the inference device may be an access network device, the update device may be a network device such as a core network element, and the measurement device may be a terminal device. Correspondingly, that the inference device sends an eighth message to the update device may include: The access network device sends the eighth message to the network device. That the inference device sends a sixth message to a measurement device may include: The access network device sends the sixth message to the terminal device. In this way, in a scenario in which the terminal device communicates with the access network device, the access network device may send the inference output and the measurement result to the network device in a unified manner, and the network device performs model evaluation and model update in a unified manner, so that workload of the terminal device can be further alleviated. Therefore, the access network device and the terminal device can use remaining resources to perform other communication tasks, so that network resource utilization is further improved.

According to an eighth aspect, a model evaluation method is provided. The model evaluation method includes: A measurement device receives a sixth message from an inference device. The sixth message includes a measurement object or an inference output of a machine learning model, and the inference output is used to determine the measurement object. The measurement device sends a measurement result to an update device. The measurement result is determined based on the measurement object. In this way, the measurement device may determine the measurement object that needs to be measured, and then send, to the update device, the measurement result obtained through actual measurement, so that the update device accurately evaluates a generalization capability of the machine learning model based on the measurement result and the corresponding inference output, thereby improving model evaluation accuracy and efficiency.

In a possible design solution, the measurement result may be included in a ninth message. In this way, the inference device and the measurement device may respectively send the inference output and the measurement result to the update device, so that workload of the inference device and the measurement device can be balanced through cooperation of the two parties. This ensures that resources in the inference device and the measurement device can be properly allocated, so that efficiency of evaluating the machine learning model can be improved.

Optionally, the sixth message may further include a transaction identifier, and the ninth message may further include the transaction identifier. The transaction identifier corresponds to the measurement result.

Optionally, the sixth message may further include an inference input of the machine learning model, and the ninth message may further include the inference input.

In another possible design solution, the measurement result may be included in a tenth message, the sixth message may include the inference output, and the tenth message may further include the inference output. In this way, the measurement device may send the inference output and the measurement result to the update device in a unified manner, and the inference device and the update device do not need to communicate with each other. Therefore, network resources of the inference device and the update device can be saved, and model evaluation efficiency can be improved.

Optionally, the sixth message may further include an inference input of the machine learning model, and the tenth message may further include the inference input.

In a possible design solution, the inference device may be a source access network device, the update device may be a network device such as a core network element, and the measurement device may be a target access network device. Correspondingly, that a measurement device receives a sixth message from an inference device may include: The target access network device receives the sixth message from the source access network device. That the measurement device sends a measurement result to an update device may include: The target access network device sends the measurement result to the network device.

In another possible design solution, the inference device may be an access network device, the update device may be a network device such as a core network element, and the measurement device may be a terminal device. Correspondingly, that a measurement device receives a sixth message from an inference device may include: The terminal device receives the sixth message from the access network device. That the measurement device sends a measurement result to an update device may include: The terminal device sends the measurement result to the network device.

In addition, for technical effects of the model evaluation method in the eighth aspect, refer to the technical effects of the model evaluation method in the seventh aspect. Details are not described herein again.

According to a ninth aspect, a model evaluation method is provided. The model evaluation method includes: An update device obtains a measurement result and an inference output of a machine learning model. The measurement result corresponds to the inference output. The update device determines an evaluation result based on the inference output and the measurement result. The update device determines sixth configuration information of the machine learning model based on the evaluation result. In this way, the update device determines, by comparing the inference output with an actual measurement result corresponding to the inference output, whether the machine learning model can obtain an accurate output based on new data in an actual scenario, to accurately evaluate a generalization capability of the machine learning model. This can resolve a problem that evaluation is inaccurate when a same preset data set is used for both model evaluation and model training, so that a fourth configuration file of the machine learning model can be determined in a timely manner based on the evaluation result from an inference device to perform model update.

Optionally, the evaluation result may include accuracy of the machine learning model. In this way, the update device can further quickly determine, based on the accuracy of the machine learning model, whether the machine learning model needs to be updated, so that machine learning model update efficiency is improved.

In a possible design solution, that an update device obtains a measurement result and an inference output of a machine learning model may include: The update device receives a seventh message from an inference device. The update device receives a ninth message from a measurement device. The seventh message includes the inference output, and the ninth message includes the measurement result.

Optionally, the seventh message may further include a transaction identifier, and the ninth message may further include the transaction identifier. The transaction identifier corresponds to the inference output and the measurement result.

Optionally, the seventh message may further include an inference input of the machine learning model, and/or the ninth message may further include the inference input of the machine learning model. The inference input and the measurement result are used to determine the sixth configuration information.

In another possible design solution, that an update device obtains a measurement result and an inference output of a machine learning model may include: The update device receives an eighth message from an inference device. The eighth message includes the inference output and the measurement result.

Optionally, the eighth message may further include an inference input of the machine learning model. The inference input and the measurement result are used to determine the sixth configuration information.

In another possible design solution, that an update device obtains a measurement result and an inference output of a machine learning model may include: The update device receives a tenth message from a measurement device. The tenth message includes the inference output and the measurement result.

Optionally, the tenth message may further include an inference input of the machine learning model. The inference input and the measurement result are used to determine the sixth configuration information.

In a possible design solution, the update device may be a network device such as a core network element, the inference device may be a source access network device, and the measurement device may be a target access network device. Correspondingly, that the update device receives a seventh message from an inference device may include: The network device receives the seventh message from the source access network device. That the update device receives a ninth message from a measurement device may include: The network device receives the ninth message from the target access network device.

In another possible design solution, the update device may be a network device such as a core network element, the inference device may be an access network device, and the measurement device may be a terminal device. Correspondingly, that the update device receives a seventh message from an inference device may include: The network device receives the seventh message from the access network device. That the update device receives a ninth message from a measurement device may include: The network device receives the ninth message from the terminal device.

In another possible design solution, the update device may be a network device, for example, a core network element, and the inference device may be a source access network device. Correspondingly, that the update device receives an eighth message from an inference device may include: The network device receives the eighth message from the source access network device.

In another possible design solution, the update device may be a network device, for example, a core network element, and the inference device may be an access network device. Correspondingly, that the update device receives an eighth message from an inference device may include: The network device receives the eighth message from the access network device.

In another possible design solution, the update device may be a network device, for example, a core network element, and the measurement device may be a target access network device. Correspondingly, that the update device receives a tenth message from a measurement device may include: The network device receives the tenth message from the target access network device. In this way, in a scenario in which a terminal device is handed over from the source access network device to the target access network device, the target access network device sends the inference output and the measurement result to the network device in a unified manner, and the network device performs model evaluation and model update in a unified manner, so that workload of the source access network device and the target access network device can be further balanced. Therefore, the target access network device and the source access network device can use remaining resources to perform other communication tasks, so that network resource utilization is further improved.

In addition, for technical effects of the model evaluation method in the ninth aspect, refer to the technical effects of the model evaluation method in the seventh aspect. Details are not described herein again.

According to a tenth aspect, a model evaluation apparatus is provided. The model evaluation apparatus includes a processing module and a transceiver module. The processing module is configured to determine an inference output of a machine learning model based on an inference input of the machine learning model, where the machine learning model is determined based on first configuration information. The transceiver module is configured to send a first message to a measurement device, where the first message includes a measurement object or the inference output, the measurement object is determined based on the inference output, and the first message is used to request a measurement result of the measurement object. The transceiver module is further configured to receive the measurement result from the measurement device, where the measurement result corresponds to the inference output. The transceiver module is further configured to send an evaluation result to an update device, where the evaluation result is determined based on the inference output and the measurement result.

Optionally, the evaluation result may include accuracy of the machine learning model.

Optionally, the measurement result may be included in a second message, the first message may further include a transaction identifier, and the second message may further include the transaction identifier. The transaction identifier corresponds to the measurement result.

Optionally, the evaluation result is carried in a third message, and the third message further includes the inference input and the measurement result.

In a possible design solution, an inference device may be a source access network device, the measurement device may be a target access network device, and the update device may be a network device. Correspondingly, the transceiver module is further configured to send the first message to the target access network device. The transceiver module is further configured to receive the measurement result from the target access network device. The processing module is further configured to control the transceiver module to send the evaluation result to the network device.

In another possible design solution, an inference device may be an access network device, the measurement device may be a terminal device, and the update device may be a network device. Correspondingly, the transceiver module is further configured to send the first message to the terminal device. The transceiver module is further configured to receive the measurement result from the terminal device. The transceiver module is further configured to send the evaluation result to the network device.

Optionally, the transceiver module may include a receiving module and a sending module. The receiving module and the sending module are respectively configured to implement a receiving function and a sending function of the model evaluation apparatus according to the tenth aspect.

Optionally, the model evaluation apparatus according to the tenth aspect may further include a storage module. The storage module stores a program or instructions. When the processing module executes the program or the instructions, the model evaluation apparatus according to the tenth aspect is enabled to perform the model evaluation method according to the first aspect.

It should be noted that the model evaluation apparatus according to the tenth aspect may be an inference device, or may be a chip (system) or another part or component that can be disposed in the inference device. This is not limited in this application.

In addition, for technical effects of the model evaluation apparatus in the tenth aspect, refer to the technical effects of the model evaluation method in the first aspect. Details are not described herein again.

According to an eleventh aspect, a model evaluation apparatus is provided. The model evaluation apparatus includes a receiving module and a sending module. The receiving module is configured to receive a first message from an inference device, where the first message includes a measurement object or an inference output of a machine learning model. The inference output is used to determine the measurement object. The sending module is configured to send a measurement result to the inference device, where the measurement result is determined based on the measurement object.

Optionally, the measurement result may be carried in a second message, the first message may further include a transaction identifier, the second message may further include the transaction identifier, and the transaction identifier corresponds to the measurement result.

In a possible design solution, a measurement device may be a target access network device, and the inference device may be a source access network device. Correspondingly, the receiving module is configured to receive the first message from the source access network device. The sending module is configured to send the measurement result to the source access network device.

In another possible design solution, a measurement device may be a terminal device, and the inference device may be an access network device. Correspondingly, the receiving module is further configured to receive the first message from the access network device. The sending module is configured to send the measurement result to the access network device.

Optionally, the sending module and the receiving module may be integrated into one module, for example, a transceiver module. The transceiver module is configured to implement a sending function and a receiving function of the model evaluation apparatus according to the eleventh aspect.

Optionally, the model evaluation apparatus according to the eleventh aspect may further include a processing module and a storage module. The storage module stores a program or instructions. When the processing module executes the program or the instructions, the model evaluation apparatus according to the eleventh aspect is enabled to perform the model evaluation method according to the second aspect.

It should be noted that the model evaluation apparatus according to the eleventh aspect may be a measurement device, or may be a chip (system) or another part or component that can be disposed in the measurement device. This is not limited in this application.

In addition, for technical effects of the model evaluation apparatus in the eleventh aspect, refer to the technical effects of the model evaluation method in the first aspect. Details are not described herein again.

According to a twelfth aspect, a model evaluation apparatus is provided. The model evaluation apparatus includes a transceiver module and a processing module. The transceiver module is configured to receive an evaluation result of a machine learning model from an inference device. The processing module is configured to determine second configuration information of the machine learning model based on the evaluation result.

Optionally, the evaluation result may include accuracy of the machine learning model, and the accuracy is used to determine the second configuration information.

Optionally, the evaluation result may be carried in a third message. The third message may further include an inference input and a measurement result, and the inference input and the measurement result are used to determine the second configuration information.

In a possible design solution, an update device may be a network device, and the inference device may be a source access network device. Correspondingly, the transceiver module is configured to receive the evaluation result from the source access network device.

In another possible design solution, an update device may be a network device, and the inference device may be an access network device. Correspondingly, the transceiver module is configured to receive the evaluation result from the access network device.

Optionally, the transceiver module may include a receiving module and a sending module. The receiving module and the sending module are respectively configured to implement a receiving function and a sending function of the model evaluation apparatus according to the twelfth aspect.

Optionally, the model evaluation apparatus according to the twelfth aspect may further include a storage module. The storage module stores a program or instructions. When the processing module executes the program or the instructions, the model evaluation apparatus according to the twelfth aspect is enabled to perform the model evaluation method according to the third aspect.

It should be noted that the model evaluation apparatus according to the twelfth aspect may be an update device, or may be a chip (system) or another part or component that can be disposed in the update device. This is not limited in this application.

In addition, for technical effects of the model evaluation apparatus in the twelfth aspect, refer to the technical effects of the model evaluation method in the first aspect. Details are not described herein again.

According to a thirteenth aspect, a model evaluation apparatus is provided. The model evaluation apparatus includes a processing module and a transceiver module. The processing module is configured to determine an inference output of a machine learning model based on an inference input of the machine learning model, where the machine learning model is determined based on third configuration information. The transceiver module is configured to send a fourth message to a measurement device, where the fourth message includes the inference output.

Optionally, the fourth message may further include the inference input.

In a possible design solution, an inference device may be a source access network device, and the measurement device may be a target access network device. Correspondingly, the transceiver module is configured to send the fourth message to the target access network device.

Optionally, the transceiver module may include a receiving module and a sending module. The receiving module and the sending module are respectively configured to implement a receiving function and a sending function of the model evaluation apparatus according to the twelfth aspect.

Optionally, the model evaluation apparatus according to the thirteenth aspect may further include a storage module. The storage module stores a program or instructions. When the processing module executes the program or the instructions, the model evaluation apparatus according to the thirteenth aspect is enabled to perform the model evaluation method according to the fourth aspect.

It should be noted that the model evaluation apparatus according to the thirteenth aspect may be an inference device, or may be a chip (system) or another part or component that can be disposed in the inference device. This is not limited in this application.

In addition, for technical effects of the model evaluation apparatus in the thirteenth aspect, refer to the technical effects of the model evaluation method in the fourth aspect. Details are not described herein again.

According to a fourteenth aspect, a model evaluation apparatus is provided. The model evaluation apparatus includes a receiving module and a sending module. The receiving module is configured to receive a fourth message from an inference device, where the fourth message includes an inference output of a machine learning model, and the inference output is used to determine a measurement object. The sending module is configured to send an evaluation result to an update device, where the evaluation result is determined based on the inference output and a measurement result, the measurement result is determined based on the measurement object, and the measurement result corresponds to the inference output.

Optionally, the evaluation result may include accuracy of the machine learning model.

Optionally, the evaluation result may be carried in a fifth message, the fourth message may further include an inference input of the machine learning model, and the fifth message may further include the inference input and the measurement result.

In a possible design solution, a measurement device may be a target access network device, the inference device may be a source access network device, and the update device may be a network device. Correspondingly, the receiving module is configured to receive the fourth message from the source access network device.

Optionally, the sending module and the receiving module may be integrated into one module, for example, a transceiver module. The transceiver module is configured to implement a sending function and a receiving function of the model evaluation apparatus according to the fourteenth aspect.

Optionally, the model evaluation apparatus according to the fourteenth aspect may further include a processing module and a storage module. The storage module stores a program or instructions. When the processing module executes the program or the instructions, the model evaluation apparatus according to the fourteenth aspect is enabled to perform the model evaluation method according to the fifth aspect.

It should be noted that the model evaluation apparatus according to the fourteenth aspect may be a measurement device, or may be a chip (system) or another part or component that can be disposed in the measurement device. This is not limited in this application.

In addition, for technical effects of the model evaluation apparatus in the fourteenth aspect, refer to the technical effects of the model evaluation method in the fourth aspect. Details are not described herein again.

According to a fifteenth aspect, a model evaluation apparatus is provided. The model evaluation apparatus includes a transceiver module and a processing module. The transceiver module is configured to receive an evaluation result of a machine learning model from a measurement device. The processing module is configured to determine fourth configuration information of the machine learning model based on the evaluation result.

Optionally, the evaluation result may include accuracy of the machine learning model, and the accuracy is used to determine the fourth configuration information.

Optionally, the evaluation result may be carried in a fifth message. The fifth message may further include an inference input and a measurement result, and the inference input and the measurement result are used to determine the fourth configuration information.

In a possible design solution, an update device may be a network device, and the measurement device may be a target access network device. Correspondingly, the transceiver module is configured to receive the evaluation result from the target access network device.

Optionally, the transceiver module may include a receiving module and a sending module. The receiving module and the sending module are respectively configured to implement a receiving function and a sending function of the model evaluation apparatus according to the fifteenth aspect.

Optionally, the model evaluation apparatus according to the fifteenth aspect may further include a storage module. The storage module stores a program or instructions. When the processing module executes the program or the instructions, the model evaluation apparatus according to the fifteenth aspect is enabled to perform the model evaluation method according to the sixth aspect.

It should be noted that the model evaluation apparatus according to the fifteenth aspect may be an update device, or may be a chip (system) or another part or component that can be disposed in the update device. This is not limited in this application.

In addition, for technical effects of the model evaluation apparatus in the fifteenth aspect, refer to the technical effects of the model evaluation method in the fourth aspect. Details are not described herein again.

According to a sixteenth aspect, a model evaluation apparatus is provided. The model evaluation apparatus includes a processing module and a transceiver module. The processing module is configured to determine an inference output of a machine learning model based on an inference input of the machine learning model, where the machine learning model is determined based on fifth configuration information. The transceiver module is configured to send the inference output to an update device. The transceiver module is further configured to send a sixth message to a measurement device, where the sixth message includes the inference output or a measurement object, the measurement object is determined based on the inference output, and the sixth message is used to request a measurement result of the measurement object.

In a possible design solution, the transceiver module is further configured to send a seventh message to the update device, where the seventh message includes the inference output.

Optionally, the sixth message may further include a transaction identifier, the seventh message may further include the transaction identifier, and the transaction identifier corresponds to the inference output.

Optionally, the seventh message may further include the inference input. In this way, the update device may construct a verification data set based on the inference input and the measurement result, to update configuration information of the machine learning model based on the verification data set, thereby further improving the generalization capability of the machine learning model.

In another possible design solution, the transceiver module is further used by an inference device to receive the measurement result from the measurement device. The transceiver module is further configured to send an eighth message to the update device, where the eighth message includes the inference output and the measurement result.

Optionally, the eighth message may further include the inference input.

Optionally, the sixth message may further include the inference input.

In a possible design solution, the inference device may be a source access network device, the update device may be a network device, and the measurement device may be a target access network device. Correspondingly, the transceiver module is further configured to send the seventh message to the network device. The transceiver module is further configured to send the sixth message to the target access network device.

In another possible design solution, the inference device may be an access network device, the update device may be a network device, and the measurement device may be a terminal device. Correspondingly, the transceiver module is further configured to send the seventh message to the network device. The transceiver module is further configured to send the sixth message to the terminal device.

In another possible design solution, the inference device may be a source access network device, the update device may be a network device, and the measurement device may be a target access network device. Correspondingly, the transceiver module is further configured to send the eighth message to the network device. The transceiver module is further configured to send the sixth message to the target access network device.

In another possible design solution, the inference device may be an access network device, the update device may be a network device, and the measurement device may be a terminal device. Correspondingly, the transceiver module is further configured to send the eighth message to the network device. The transceiver module is further configured to send the sixth message to the terminal device.

Optionally, the transceiver module may include a receiving module and a sending module. The receiving module and the sending module are respectively configured to implement a receiving function and a sending function of the model evaluation apparatus according to the sixteenth aspect.

Optionally, the model evaluation apparatus according to the sixteenth aspect may further include a storage module. The storage module stores a program or instructions. When the processing module executes the program or the instructions, the model evaluation apparatus according to the sixteenth aspect is enabled to perform the model evaluation method according to the seventh aspect.

It should be noted that the model evaluation apparatus according to the sixteenth aspect may be an inference device, or may be a chip (system) or another part or component that can be disposed in the inference device. This is not limited in this application.

In addition, for technical effects of the model evaluation apparatus in the sixteenth aspect, refer to the technical effects of the model evaluation method in the seventh aspect. Details are not described herein again.

According to a seventeenth aspect, a model evaluation apparatus is provided. The model evaluation apparatus includes a receiving module and a sending module. The receiving module is configured to receive a sixth message from an inference device, where the sixth message includes a measurement object or an inference output of a machine learning model, and the inference output is used to determine the measurement object. The sending module is configured to send a measurement result to an update device, where the measurement result is determined based on the measurement object.

In a possible design solution, the measurement result may be included in a ninth message.

Optionally, the sixth message may further include a transaction identifier, and the ninth message may further include the transaction identifier. The transaction identifier corresponds to the measurement result.

Optionally, the sixth message may further include an inference input of the machine learning model, and the ninth message may further include the inference input.

In another possible design solution, the measurement result may be included in a tenth message, the sixth message may include the inference output, and the tenth message may further include the inference output.

Optionally, the sixth message may further include an inference input of the machine learning model, and the tenth message may further include the inference input.

In a possible design solution, the inference device may be a source access network device, the update device may be a network device, and a measurement device may be a target access network device. Correspondingly, the receiving module is configured to receive the sixth message from the source access network device. The sending module is configured to send the measurement result to the network device.

In another possible design solution, the inference device may be an access network device, the update device may be a network device, and a measurement device may be a terminal device. Correspondingly, the receiving module is configured to receive the sixth message from the access network device. The sending module is configured to send the measurement result to the network device.

Optionally, the sending module and the receiving module may be integrated into one module, for example, a transceiver module. The transceiver module is configured to implement a sending function and a receiving function of the model evaluation apparatus according to the seventeenth aspect.

Optionally, the model evaluation apparatus according to the seventeenth aspect may further include a processing module and a storage module. The storage module stores a program or instructions. When the processing module executes the program or the instructions, the model evaluation apparatus according to the seventeenth aspect is enabled to perform the model evaluation method according to the eighth aspect.

It should be noted that the model evaluation apparatus according to the seventeenth aspect may be a measurement device, or may be a chip (system) or another part or component that can be disposed in the measurement device. This is not limited in this application.

In addition, for technical effects of the model evaluation apparatus in the seventeenth aspect, refer to the technical effects of the model evaluation method in the seventh aspect. Details are not described herein again.

According to an eighteenth aspect, a model evaluation apparatus is provided. The model evaluation apparatus includes a transceiver module and a processing module. The transceiver module is configured to obtain a measurement result and an inference output of a machine learning model, where the measurement result corresponds to the inference output. The processing module is configured to determine an evaluation result based on the inference output and the measurement result. The processing module is further configured to determine sixth configuration information of the machine learning model based on the evaluation result.

Optionally, the evaluation result may include accuracy of the machine learning model.

In a possible design solution, the transceiver module is further configured to receive a seventh message from an inference device, where the seventh message includes the inference output. The transceiver module is further configured to receive a ninth message from a measurement device, where the ninth message includes the measurement result.

Optionally, the seventh message may further include a transaction identifier, and the ninth message may further include the transaction identifier. The transaction identifier corresponds to the inference output and the measurement result.

Optionally, the seventh message may further include an inference input of the machine learning model, and/or the ninth message may further include the inference input of the machine learning model. The inference input and the measurement result are used to determine the sixth configuration information.

In another possible design solution, the transceiver module is further configured to receive an eighth message from an inference device, where the eighth message includes the inference output and the measurement result.

Optionally, the eighth message may further include an inference input of the machine learning model. The inference input and the measurement result are used to determine the sixth configuration information.

In another possible design solution, the transceiver module is further configured to receive a tenth message from a measurement device, where the tenth message includes the inference output and the measurement result.

Optionally, the tenth message may further include an inference input of the machine learning model. The inference input and the measurement result are used to determine the sixth configuration information.

In a possible design solution, an update device may be a network device, the inference device may be a source access network device, and the measurement device may be a target access network device. Correspondingly, the transceiver module is further configured to receive the seventh message from the source access network device. The transceiver module is further configured to receive the ninth message from the target access network device.

In another possible design solution, an update device may be a network device, the inference device may be an access network device, and the measurement device may be a terminal device. Correspondingly, the transceiver module is further configured to receive the seventh message from the access network device. The transceiver module is further configured to receive the ninth message from the terminal device.

In another possible design solution, an update device may be a network device, and the inference device may be a source access network device. Correspondingly, the transceiver module is further configured to receive the eighth message from the source access network device.

In another possible design solution, an update device may be a network device, and the inference device may be an access network device. Correspondingly, the transceiver module is further configured to receive the eighth message from the access network device.

In another possible design solution, an update device may be a network device, and the measurement device may be a target access network device. Correspondingly, the transceiver module is further configured to receive the tenth message from the target access network device.

Optionally, the transceiver module may include a receiving module and a sending module. The receiving module and the sending module are respectively configured to implement a receiving function and a sending function of the model evaluation apparatus according to the eighteenth aspect.

Optionally, the model evaluation apparatus according to the eighteenth aspect may further include a storage module. The storage module stores a program or instructions. When the processing module executes the program or the instructions, the model evaluation apparatus according to the eighteenth aspect is enabled to perform the model evaluation method according to the ninth aspect.

It should be noted that the model evaluation apparatus according to the eighteenth aspect may be an update device, or may be a chip (system) or another part or component that can be disposed in the update device. This is not limited in this application.

In addition, for technical effects of the model evaluation apparatus in the eighteenth aspect, refer to the technical effects of the model evaluation method in the seventh aspect. Details are not described herein again.

According to a nineteenth aspect, a model evaluation apparatus is provided. The model evaluation apparatus is configured to perform the model evaluation method according to any one of the implementations of the first aspect to the ninth aspect.

In this application, the model evaluation apparatus according to the nineteenth aspect may be the inference device according to the first aspect, the fourth aspect, or the seventh aspect, or the measurement device according to the second aspect, the fifth aspect, or the eighth aspect, or the update device according to the first aspect, the fourth aspect, or the seventh aspect, or a chip (system) or another part or component that can be disposed in the foregoing device and/or network element, or an apparatus including the foregoing device and/or network element.

It should be understood that the model evaluation apparatus according to the nineteenth aspect includes a corresponding module, unit, or means (means) for implementing the model evaluation method according to any one of the first aspect to the ninth aspect. The module, unit, or means may be implemented by hardware, or may be implemented by software, or may be implemented by hardware executing corresponding software. The hardware or the software includes one or more modules or units configured to perform functions related to any one of the foregoing model evaluation methods.

In addition, for technical effects of the model evaluation apparatus according to the nineteenth aspect, refer to the technical effects of the model evaluation method according to any one of the first aspect to the ninth aspect. Details are not described herein again.

According to a twentieth aspect, a model evaluation apparatus is provided. The model evaluation apparatus includes a processor, and the processor is configured to perform the model evaluation method according to any one of the possible implementations of the first aspect to the ninth aspect.

In a possible design solution, the model evaluation apparatus according to the twentieth aspect may further include a transceiver. The transceiver may be a transceiver circuit or an interface circuit. The transceiver may be configured to perform communication between the model evaluation apparatus according to the twentieth aspect and another model evaluation apparatus.

In a possible design solution, the model evaluation apparatus according to the twentieth aspect may further include a memory. The memory and the processor may be integrated together, or may be disposed separately. The memory may be configured to store a computer program and/or data related to the model evaluation method according to any one of the first aspect to the ninth aspect.

In this application, the model evaluation apparatus according to the twentieth aspect may be the inference device according to the first aspect, the fourth aspect, or the seventh aspect, or the measurement device according to the second aspect, the fifth aspect, or the eighth aspect, or the update device according to the first aspect, the fourth aspect, or the seventh aspect, or a chip (system) or another part or component that can be disposed in the foregoing device and/or network element, or an apparatus including the foregoing device or network element.

In addition, for technical effects of the model evaluation apparatus according to the twentieth aspect, refer to the technical effects of the model evaluation method according to any one of the implementations of the first aspect to the ninth aspect. Details are not described herein.

According to a twenty-first aspect, a model evaluation apparatus is provided. The model evaluation apparatus includes a processor. The processor is coupled to a memory, and the processor is configured to execute a computer program stored in the memory, so that the model evaluation apparatus performs the model evaluation method according to any one of the possible implementations of the first aspect to the ninth aspect.

In a possible design solution, the model evaluation apparatus according to the twenty-first aspect may further include a transceiver. The transceiver may be a transceiver circuit or an interface circuit. The transceiver may be configured to perform communication between the model evaluation apparatus according to the twenty-first aspect and another model evaluation apparatus.

In this application, the model evaluation apparatus according to the twenty-first aspect may be the inference device according to the first aspect, the fourth aspect, or the seventh aspect, or the measurement device according to the second aspect, the fifth aspect, or the eighth aspect, or the update device according to the first aspect, the fourth aspect, or the seventh aspect, or a chip (system) or another part or component that can be disposed in the foregoing device and/or network element, or an apparatus including the foregoing device or network element.

In addition, for technical effects of the model evaluation apparatus according to the twenty-first aspect, refer to the technical effects of the model evaluation method according to any one of the implementations of the first aspect to the ninth aspect. Details are not described herein.

According to a twenty-second aspect, a model evaluation apparatus is provided, including a processor and a memory. The memory is configured to store a computer program. When the processor executes the computer program, the model evaluation apparatus is enabled to perform the model evaluation method according to any one of the implementations of the first aspect to the ninth aspect.

In a possible design solution, the model evaluation apparatus according to the twenty-second aspect may further include a transceiver. The transceiver may be a transceiver circuit or an interface circuit. The transceiver may be configured to perform communication between the model evaluation apparatus according to the twenty-second aspect and another model evaluation apparatus.

In this application, the model evaluation apparatus according to the twenty-second aspect may be the inference device according to the first aspect, the fourth aspect, or the seventh aspect, or the measurement device according to the second aspect, the fifth aspect, or the eighth aspect, or the update device according to the first aspect, the fourth aspect, or the seventh aspect, or a chip (system) or another part or component that can be disposed in the foregoing device and/or network element, or an apparatus including the foregoing device or network element.

In addition, for technical effects of the model evaluation apparatus according to the twenty-second aspect, refer to the technical effects of the model evaluation method according to any one of the implementations of the first aspect to the ninth aspect. Details are not described herein.

According to a twenty-third aspect, a model evaluation apparatus is provided, including a processor. The processor is configured to: be coupled to a memory, and after reading a computer program in the memory, perform, according to the computer program, the model evaluation method according to any one of the implementations of the first aspect to the ninth aspect.

In a possible design solution, the model evaluation apparatus according to the twenty-third aspect may further include a transceiver. The transceiver may be a transceiver circuit or an interface circuit. The transceiver may be configured to perform communication between the model evaluation apparatus according to the twenty-third aspect and another model evaluation apparatus.

In this application, the model evaluation apparatus according to the twenty-third aspect may be the inference device according to the first aspect, the fourth aspect, or the seventh aspect, or the measurement device according to the second aspect, the fifth aspect, or the eighth aspect, or the update device according to the first aspect, the fourth aspect, or the seventh aspect, or a chip (system) or another part or component that can be disposed in the foregoing device and/or network element, or an apparatus including the foregoing device or network element.

In addition, for technical effects of the model evaluation apparatus according to the twenty-third aspect, refer to the technical effects of the model evaluation method according to any one of the implementations of the first aspect to the ninth aspect. Details are not described herein.

According to a twenty-fourth aspect, a processor is provided. The processor is configured to perform the model evaluation method according to any one of the possible implementations of the first aspect to the ninth aspect.

According to a twenty-fifth aspect, a model evaluation system is provided. The model evaluation system includes an inference device, a measurement device, and an update device.

According to a twenty-sixth aspect, a computer-readable storage medium is provided, including a computer program or instructions. When the computer program or the instructions is/are run on a computer, the computer is enabled to perform the model evaluation method according to any one of the possible implementations of the first aspect to the ninth aspect.

According to a twenty-seventh aspect, a computer program product is provided, including a computer program or instructions. When the computer program or the instructions is/are run on a computer, the computer is enabled to perform the model evaluation method according to any one of the possible implementations of the first aspect to the ninth aspect.

### BRIEF DESCRIPTION OF DRAWINGS

FIG. 1 is a schematic diagram of an architecture of a model evaluation system according to an embodiment of this application;
FIG. 2 is a schematic diagram 1 of an architecture of a communication system according to an embodiment of this application;
FIG. 3 is a schematic diagram 2 of an architecture of a communication system according to an embodiment of this application;
FIG. 4 is a diagram of a physical architecture of an access network device according to an embodiment of this application;
FIG. 5 is a schematic flowchart 1 of a model evaluation method according to an embodiment of this application;
FIG. 6 is a diagram 1 of a protocol architecture according to an embodiment of this application;
FIG. 7 is a diagram 2 of a protocol architecture according to an embodiment of this application;
FIG. 8 is a schematic flowchart 2 of a model evaluation method according to an embodiment of this application;
FIG. 9 is a schematic flowchart 3 of a model evaluation method according to an embodiment of this application;
FIG. 10 is a schematic flowchart 4 of a model evaluation method according to an embodiment of this application;
FIG. 11 is a schematic flowchart 5 of a model evaluation method according to an embodiment of this application;
FIG. 12 is a schematic flowchart 6 of a model evaluation method according to an embodiment of this application;
FIG. 13 is a schematic flowchart 7 of a model evaluation method according to an embodiment of this application;
FIG. 14 is a schematic flowchart 8 of a model evaluation method according to an embodiment of this application;
FIG. 15 is a schematic flowchart 9 of a model evaluation method according to an embodiment of this application;
FIG. 16 is a schematic flowchart 10 of a model evaluation method according to an embodiment of this application;
FIG. 17 is a schematic flowchart 11 of a model evaluation method according to an embodiment of this application;
FIG. 18 is a schematic diagram 1 of a structure of a model evaluation apparatus according to an embodiment of this application;
FIG. 19 is a schematic diagram 2 of a structure of a model evaluation apparatus according to an embodiment of this application; and
FIG. 20 is a schematic diagram 3 of a structure of a model evaluation apparatus according to an embodiment of this application.

### DESCRIPTION OF EMBODIMENTS

For ease of understanding of embodiments of this application, terms in embodiments of this application are first described briefly.
1. Artificial intelligence (artificial intelligence, AI) technology: is a technology that presents human intelligence by using a computer program, and is a theory, a method, a technology, and an application system that simulate and extend human intelligence by using a digital computer or a machine controlled by a digital computer, to perceive an environment, obtain knowledge, and use the knowledge to obtain an optimal result. In other words, AI is a comprehensive technology in computer science, and aims to understand the essence of intelligence and produce a new intelligent machine that can react in a manner similar to human intelligence. Artificial intelligence is to study design principles and implementation methods of various intelligent machines, so that the machines have perception, inference, and decision-making functions.
   The artificial intelligence technology is a comprehensive subject, and relates to a wide range of fields, including both hardware and software technologies. Basic technologies of artificial intelligence generally include technologies such as a sensor, a special-purpose artificial intelligence chip, cloud computing, distributed storage, a big data processing technology, an operation/interaction system, and mechatronics. Software technologies of artificial intelligence mainly include a computer vision technology, a voice processing technology, a natural language processing technology, machine learning/deep learning, and the like.
2. Machine learning (machine learning, ML) technology: is a multi-field interdiscipline, and relates to a plurality of disciplines such as a probability theory, statistics, an approximation theory, convex analysis, and an algorithm complexity theory. The machine learning technology focuses on a study of how a computer simulates or implements learning behavior of human beings to obtain new knowledge or skills, and reorganizes an existing knowledge structure to continuously improve performance of the computer. Machine learning is the core of artificial intelligence and the fundamental way to make computers intelligent, and is widely used in various fields of artificial intelligence. Machine learning and deep learning generally include technologies such as an artificial neural network, a confidence network, reinforcement learning, transfer learning, inductive learning, and learning from instruction.
   The essence of machine learning is to enable a computer to simulate the foregoing process, so that the computer "learns" to obtain a specific type of cognition, and determines a new object through such cognition. Such cognition can be reflected by a "machine learning model", and can be understood as a function in mathematics.
3. Machine learning model (model): In embodiments of this application, artificial intelligence and machine learning are not distinguished for the machine learning model, and the machine learning model may be represented as an ML model or an AI model. The machine learning model in embodiments of this application is generally an AI model and an ML model in the AI field and the ML field. For example, the machine learning model includes linear regression (linear regression), logistic regression (logistic regression), a decision tree (decision tree), naive Bayes (naive bayes), K-nearest neighbors (k-nearest neighbors), support vector machines (support vector machines), a deep neural network (deep neural network), or a random forest (random forest). The ML model is deployed based on ML model configuration information. The ML model configuration information may include parameters of the ML model, a connection relationship and weights of the parameters, and the like.

It should be noted that the machine learning model may be implemented in one or more forms such as a program, an executable script, or a configuration file. This is not specifically limited in embodiments of this application.

The following describes technical solutions of this application with reference to accompanying drawings.

The technical solutions in embodiments of this application may be applied to a model evaluation system, or may be applied to various communication systems with a machine learning function, for example, a wireless fidelity (wireless fidelity, Wi-Fi) system, a vehicle-to-everything (vehicle to everything, V2X) communication system, a device-to-device (device-to-device, D2D) communication system, an internet of vehicles communication system, a 4th generation (4th generation, 4G) mobile communication system such as a long term evolution (long term evolution, LTE) system or a worldwide interoperability for microwave access (worldwide interoperability for microwave access, WiMAX) communication system, a 5th generation (5th generation, 5G) mobile communication system such as a new radio (new radio, NR) system, and a future communication system such as a 6th generation (6th generation, 6G) mobile communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are used to represent giving an example, an illustration, or a description. Any embodiment or design scheme described as an "example" in this application should not be explained as being more preferred or having more advantages than another embodiment or design scheme. Specifically, the term "example" is used to present a concept in a specific manner.

In embodiments of this application, terms "information (information)", "signal (signal)", "message (message)", "channel (channel)", and "signaling (signaling)" may sometimes be interchangeably used. It should be noted that meanings expressed by the terms are consistent when differences of the terms are not emphasized. Terms "of (of)", "corresponding (corresponding, relevant)", and "corresponding (corresponding)" may be interchangeably used sometimes. It should be noted that meanings expressed by the terms are consistent when differences of the terms are not emphasized.

In embodiments of this application, a subscript, for example, Wi, may sometimes be written in an incorrect form, for example, W1. Expressed meanings are consistent when differences are not emphasized.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that, with the evolution of the network architecture and the emergence of new service scenarios, the technical solutions provided in embodiments of this application are also applicable to similar technical problems.

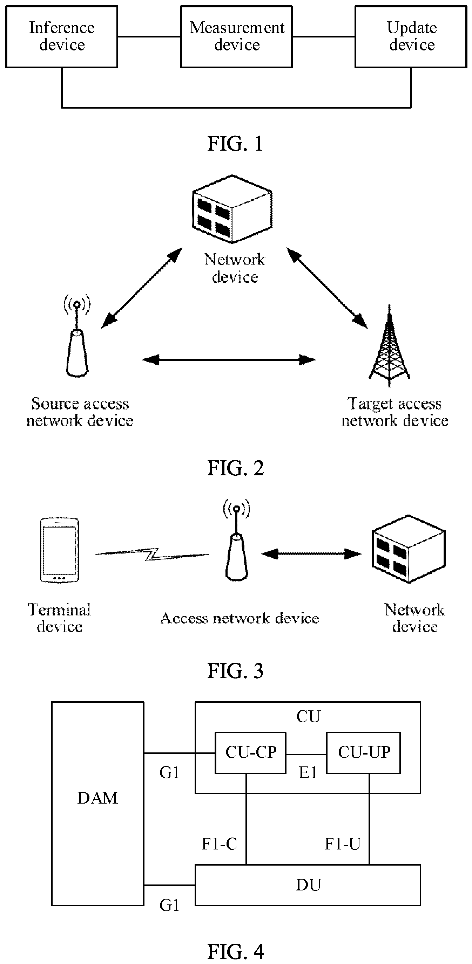

For ease of understanding of embodiments of this application, a model evaluation system shown in FIG. 1 is used as an example to first describe in detail a model evaluation system applicable to embodiments of this application. It should be noted that the solutions in embodiments of this application may also be applied to another model evaluation system, and a corresponding name may also be replaced with a name of a corresponding function in the another model evaluation system.

For example, FIG. 1 is a schematic diagram of an architecture of a model evaluation system to which a model evaluation method is applicable according to an embodiment of this application. The model evaluation system shown in FIG. 1 includes an inference device, a measurement device, and an update device.

The inference device may locally configure a corresponding machine learning model based on configuration information that is of the machine learning model and that is sent by the update device in advance, to perform inference by using the machine learning model. The measurement device may perform measurement based on a received message. The update device may update the configuration information of the machine learning model, and send updated configuration information to the inference device, to update the machine learning model locally configured on the inference device.

In this embodiment of this application, performing inference by using the machine learning model refers to a process of processing data, that is, an inference input, according to a specific computer program. After inference, data, that is, an inference output, corresponding to the inference input may be output. The inference input may be provided by the inference device based on the configuration information of the machine learning model. Alternatively, the inference device may request, based on the configuration information of the machine learning model, the measurement device to provide the inference input. A source of the inference input in this embodiment of this application is not specifically limited.

Both the inference device and the measurement device may be access network devices. Alternatively, the measurement device may be a terminal device that communicates with an access network device. The update device may be a core network element or a network control device that controls and manages an access network device. Descriptions are separately provided below

In a possible design solution, the inference device may be a source access network device shown in FIG. 2, the measurement device may be a target access network device shown in FIG. 2, and the update device may be a network device shown in FIG. 2.

In another possible design solution, the inference device may be an access network device shown in FIG. 3, the measurement device may be a terminal device shown in FIG. 3, and the update device may be a network device shown in FIG. 3.

The following specifically describes the model evaluation system in FIG. 1 with reference to two communication systems shown in FIG. 2 and FIG. 3.

For example, FIG. 2 is a schematic diagram 1 of a structure of a communication system according to an embodiment of this application. The communication system shown in FIG. 2 includes a network device, a source access network device, and a target access network device. There may be one or more network devices, one or more source access network devices, and one or more target access network devices, and one or more antennas may be configured for each of the source access network device and the target access network device.

A function of the inference device shown in FIG. 1 may be implemented by the source access network device shown in FIG. 2, a function of the measurement device may be implemented by the target access network device shown in FIG. 2, and a function of the update device shown in FIG. 1 may be implemented by the network device shown in FIG. 2.

The network device may be any one or more network elements in a core network (core network, CN). The core network may include the following network elements: an access and mobility management function (access and mobility management function, AMF) or a network data analytics function (network data analytics function, NWDAF). The AMF is mainly responsible for functions such as access control, mobility management, attachment and detachment, and gateway selection. The NWDAF is mainly responsible for functions such as data collection and analysis. A core network element (also referred to as a core network device) in this application is not limited to an AMF network element and an NWDAF network element. Details are not described herein.

Optionally, the network device may alternatively be a network control device. The network control device may be a device in an operation, administration, and maintenance (operation administration and maintenance, CAM) system (also referred to as a network management system). The network control device may manage the source access network device, the target access network device, and the core network element.

The source access network device and the target access network device may be devices in an access network (access network, AN). The AN is mainly configured to implement an access-related function, and may include a radio access network (radio access network, RAN). The RAN is a device that connects a terminal device to a wireless network, and is mainly configured to provide functions such as radio resource management, quality of service management, and data encryption and compression for the terminal device.

Specifically, the source access network device, the target access network device, or the RAN is a device that is located on a network side of the communication system and that has wireless sending and receiving functions, or a chip (system) or another part or component that can be disposed on the network side device, and includes but is not limited to:
(1) a next generation node (next generation node B, gNB) in 5G such as a new radio (new radio, NR) system, where the gNB provides control plane and/or user plane protocols and functions of NR for a terminal device, and connects the terminal device to a 5G core network;
(2) a next generation evolved NodeB (next generation evolved node B, ng-eNB) in an evolved universal terrestrial radio access (evolved universal terrestrial radio access, E-UTRA) system, where the ng-eNB provides control plane and/or user plane protocols and functions of E-UTRA for a terminal device, and connects the terminal device to a 5G core network;
(3) a central unit (central unit, CU), where the CU may mainly include a radio resource control (radio resource control, RRC) layer, a service data adaptation protocol (service data adaptation protocol, SDAP) layer, and a packet data convergence protocol (packet data convergence protocol, PDCP) layer of a gNB, or may mainly include an RRC layer and a PDCP layer of an ng-eNB;
(4) a distributed unit (distributed unit, DU), where the DU may mainly include a radio link control (radio link control, RLC) layer, a media access control (media access control, MAC) layer, and a physical (physical, PHY) layer of a gNB or an ng-eNB;
(5) a central unit-control plane (central unit-control plane, CU-CP), where the CU-CP mainly includes a control plane at an RRC layer and a PDCP layer in a gNB-CU or an ng-eNB-CU;
(6) a central unit-user plane (central unit-user plane, CU-UP), where the CU-UP mainly includes a user plane at an SDAP layer and a PDCP layer in a gNB-CU or an ng-eNB-CU; or
(7) a data analysis and management (data analysis and management, DAM), where the DAM is mainly responsible for functions such as data collection, ML model training, ML model generation, ML model update, and ML model distribution.

It should be noted that, the source access network device, the target access network device, or the RAN may alternatively include: an access point (access point, AP) such as a home gateway, a router, a server, a switch, or a bridge, an evolved NodeB (evolved node B, eNB), a radio network controller (radio network controller, RNC), a NodeB (node B, NB), a base station controller (base station controller, BSC), a base transceiver station (base transceiver station, BTS), a home base station (for example, a home evolved NodeB or a home NodeB, HNB), a baseband unit (baseband unit, BBU), a radio relay node, a radio backhaul node, a transmission and reception point (transmission and reception point, TRP, or transmission point, TP), or a transmission point (TRP or TP) in a wireless fidelity (wireless fidelity, Wi-Fi) system, or one antenna panel or a group of antenna panels (including a plurality of antenna panels) of a base station in a 5G system, or may be a network node such as a baseband unit (BBU) that forms a gNB or a transmission point, or a roadside unit (road side unit, RSU) having a base station function.

FIG. 4 is a diagram of a physical architecture of an access network device according to an embodiment of this application. The access network device shown in FIG. 4 includes a central unit (central unit, CU) and a distributed unit (distributed unit, DU). There may be one or more CUs and one or more DUs. It may be understood that the access network device is divided into the CU and the DU from the perspective of logical functions. The CU and the DU may be physically split, or may be deployed together. This is not specifically limited in embodiments of this application. The CU and the DU may be connected through an interface, for example, an F1 interface. The CU and the DU may be obtained through division based on protocol layers of a wireless network. For example, functions of a radio resource control (radio resource control, RRC) layer, a service data adaptation protocol (service data adaptation protocol, SDAP) layer, and a packet data convergence protocol (packet data convergence protocol, PDCP) layer are set in the CU, and functions of a radio link control (radio link control, RLC) layer, a media access control (media access control, MAC) layer, a physical (physical, PHY) layer, and the like are set in the DU. It may be understood that, division into processing functions of the CU and the DU based on the protocol layers is merely an example, and division may alternatively be performed in another manner. This is not specifically limited in this embodiment of this application.

Optionally, the CU includes a CU control plane (CU control plane, CU-CP) and a CU user plane (CU user plane, CU-UP). One CU includes one CU-CP and one or more CU-UPs. It may be understood that the CU is divided into the CU-CP and the CU-UP from the perspective of logical functions. The CU-CP and the CU-UP may be obtained through division based on protocol layers of a wireless network. For example, control planes at an RRC layer and a PDCP layer are set in the CU-CP, and a user plane at a PDCP layer is set in the CU-UP. In addition, a function of an SDAP layer may also be set in the CU-UP. The CU-CP and the CU-UP may be connected through an interface, for example, an E1 interface. The CU-CP and the DU may be connected through an F1 control plane interface (F1-C), and the CU-UP and the DU may be connected through an F1 user plane interface (F1-U). Further, the CU, the DU, or the CU-CP may be connected to a data analysis and management (data analysis and management, DAM) unit through a G1 interface. Optionally, the DAM unit may be used as an internal function of the CU, the DU, or the CU-CP. In this case, the G1 interface is an internal interface.

Still refer to FIG. 2. The communication system shown in FIG. 2 may further include a terminal device. The terminal device is a terminal accessing the communication system and having wireless sending and receiving functions, or a chip or a chip system that can be disposed in the terminal. The terminal device may also be referred to as a user apparatus, an access terminal, a subscriber unit, a subscriber station, a mobile station, a remote station, a remote terminal, a mobile device, a user terminal, a terminal, a wireless communication device, a user agent, or a user apparatus. The terminal device in embodiments of this application may be a mobile phone (mobile phone), a tablet computer (Pad), a computer having wireless sending and receiving functions, a virtual reality (virtual reality, VR) terminal device, an augmented reality (augmented reality, AR) terminal device, a wireless terminal in industrial control (industrial control), a wireless terminal in self-driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, an RSU that has a terminal function, or the like. The terminal device in this application may alternatively be a vehicle-mounted module, a vehicle-mounted component, a vehicle-mounted chip, or a vehicle-mounted unit that is built in a vehicle as one or more components or units. The vehicle may implement model evaluation in this application by using the built-in vehicle-mounted module, vehicle-mounted component, vehicle-mounted chip, or vehicle-mounted unit.

In embodiments of this application, the access network device and various network elements in the core network may also be collectively referred to as network side devices. Similarly, the terminal device may also be referred to as a user side device or user equipment. A name of each network side device or user side device is not specifically limited in embodiments of this application.

It should be understood that FIG. 1, FIG. 2, FIG. 3, and FIG. 4 are merely simplified schematic diagrams for ease of understanding. The model evaluation system shown in FIG. 1 and the communication systems shown in FIG. 2 and FIG. 3 may further include other network side devices and/or other terminal devices, which are not shown in FIG. 1, FIG. 2, and FIG. 3.

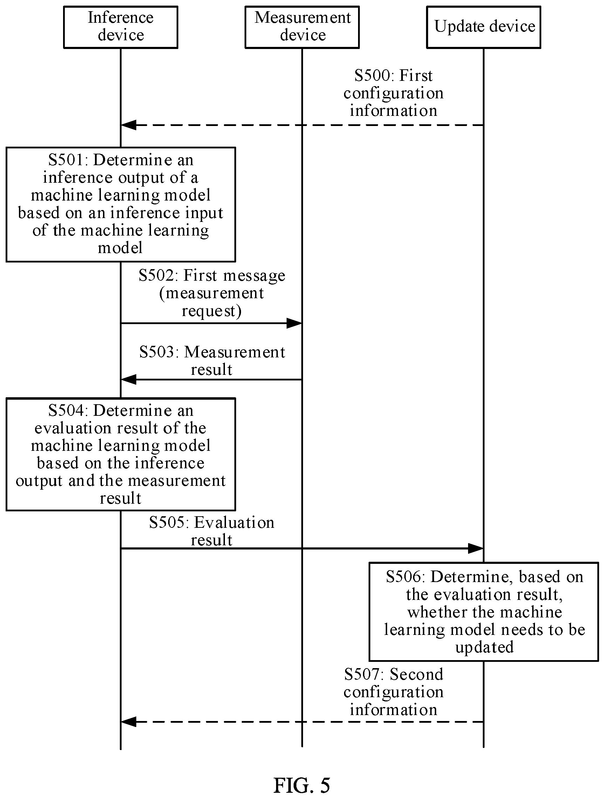

For example, FIG. 5 is a schematic flowchart 1 of a model evaluation method according to an embodiment of this application. The model evaluation method is applicable to the model evaluation system shown in FIG. 1, or applicable to the communication system shown in FIG. 2 or FIG. 3. The following uses the model evaluation system shown in FIG. 1 as an example for description.

As shown in FIG. 5, the model evaluation method includes the following steps.

S500: An update device sends first configuration information to an inference device. The first configuration information is used to request the inference device to determine a machine learning model.

For example, the update device may be the network device shown in FIG. 2 or FIG. 3, and the inference device may be the source access network device shown in FIG. 2, or may be the access network device shown in FIG. 3. The machine learning model is a model that needs to be evaluated. The machine learning model is determined based on the first configuration information. The inference device may configure the machine learning model based on the first configuration information, and may further determine, based on third configuration information, a data set that needs to be input into the machine learning model and an output that should be obtained based on input data.

The first configuration information may include parameters of the machine learning model, and a connection relationship and weights of the parameters. These parameters may be obtained through model training. Optionally, the first configuration information may alternatively be source code of the machine learning model, executable program code of the machine learning model, partially or completely compiled code of the machine learning model, or the like. The inference device may obtain the first configuration information from the update device, or may directly obtain pre-received first configuration information from a cache. In other words, if the update device has sent the first configuration information to the inference device, the update device does not need to send the first configuration information to the inference device again. In this case, S500 may be considered as an optional step. Optionally, the first configuration information may further include a model identifier of the machine learning model, and the model identifier is used to distinguish between different machine learning models. The inference device may find the corresponding machine learning model based on the model identifier, and locally deploy, with reference to the parameters of the machine learning model and the connection relationship and weights of the parameters in the first configuration information, a machine learning model having an inference function.

Further, there may be a correspondence between a model identifier and a machine learning model. For example, a model identifier 1 is used to identify an Alex network (AlexNet) model, a model identifier 2 is used to identify a visual geometry group (visual geometry group 16, VGG16) model, and a model identifier 3 is used to identify a residual network-152 (residual network, ResNet-152) model. Alternatively, a specific model number may be directly used as a model identifier. For example, a model identifier AlexNet represents an Alex network model, a model identifier VGG16 represents a visual geometry group model, and a model identifier ResNet-152 represents a residual network-152 model.

S501: The inference device determines an inference output of the machine learning model based on an inference input of the machine learning model. The inference input of the machine learning model is a data set that needs to be input into the machine learning model for inference, and is a data set determined by the inference device based on the first configuration information in an actual scenario. The inference input may be a data set pre-cached in the inference device. A source of the inference input in this embodiment of this application is not specifically limited. The inference output of the machine learning model is inference data obtained after the inference device performs inference by using the machine learning model based on the inference input, that is, a data set output by the machine learning model.

The following uses a plurality of scenarios as examples to specifically describe the inference input and the inference output.

In a scenario 1, a terminal device is handed over from a cell of a source access network device to a cell of a target access network device. Correspondingly, the inference input may include load information of a neighboring cell, load information of the terminal device, and neighboring cell coverage information measured by the terminal device, and the inference output may include predicted load information of a target cell to which the terminal device is successfully handed over.

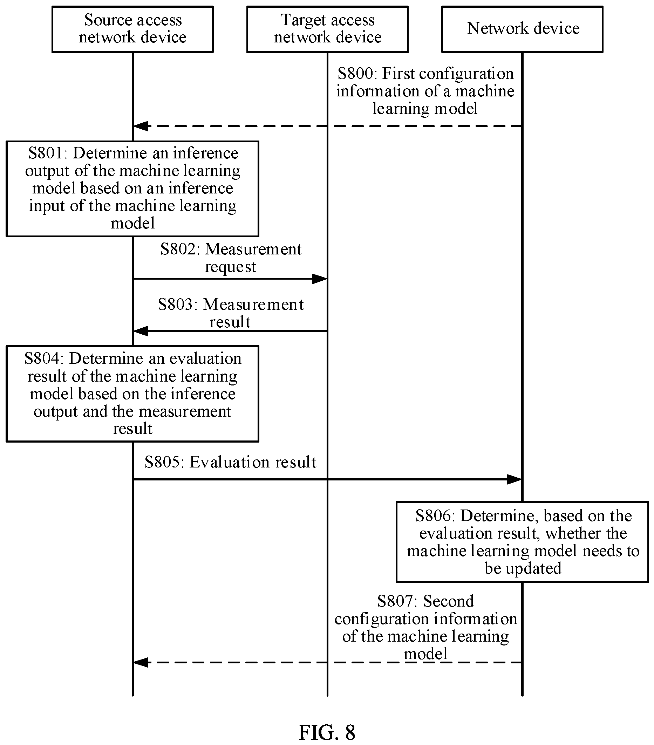

In a scenario 2, cell reconfiguration of a source access network device causes a change in a coverage area of a cell, and a terminal device may perform cell handover. Correspondingly, the inference input may include coverage configuration information and cell information of the cell, and may further include coverage information of the terminal device accessing the cell, and the inference output may include a cell coverage configuration and a predicted value of an uplink/downlink packet loss rate and/or a predicted value of a packet delay of the terminal device in the cell. For specific implementations of the inference input and the inference output in the scenario 1 and the scenario 2, refer to FIG. 8, FIG. 11, and FIG. 13 to FIG. 15. Details are not described herein.

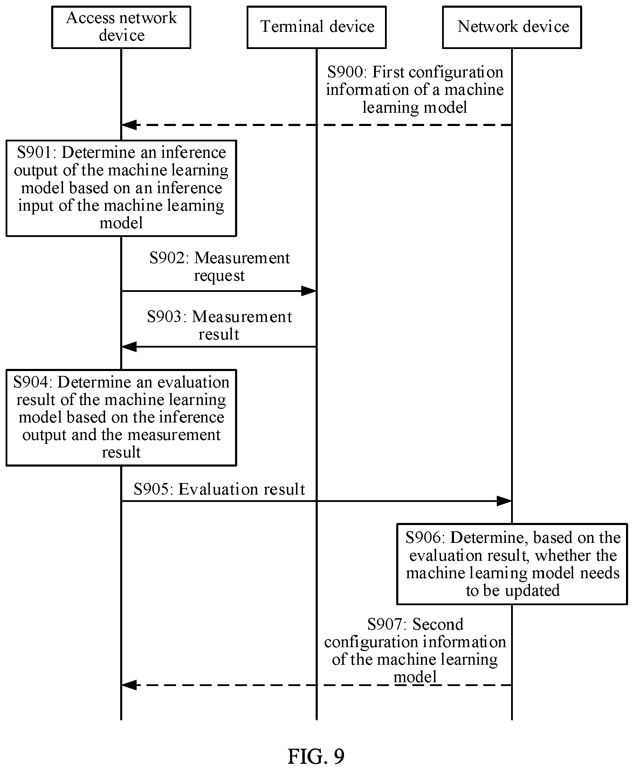

In a scenario 3, a terminal device performs an energy saving operation based on a received discontinuous reception (discontinuous reception, DRX) configuration. Correspondingly, the inference input may include service traffic of the terminal device, and the inference output may include a DRX configuration and a predicted value of a packet delay of the terminal device in the DRX configuration. For specific implementations of the inference input and the inference output in the scenario 3, refer to FIG. 9, FIG. 16, and FIG. 17. Details are not described herein.

It should be noted that a function of the machine learning model may be determined based on the first configuration information, and inference functions of the machine learning model that are obtained based on different configuration information may be different. For example, when the inference device is a source access network device, a configured load prediction model may perform inference based on load information of a neighboring cell, load information of a terminal device, and neighboring cell coverage information measured by the terminal device, to obtain predicted load information of the neighboring cell after the terminal device is handed over to the neighboring cell.

For another example, when the inference device is a source access network device, a configured coverage and capacity optimization (coverage and capacity optimization, CCO) model may perform inference based on coverage configuration information of a cell and at least one of the following cell information: load information, an uplink/downlink packet loss rate (packet loss rate), a packet delay (packet delay), and a data volume (data volume), to obtain a predicted value of an uplink/downlink packet loss rate and/or a predicted value of a packet delay of a terminal device in the cell after a different cell coverage configuration is used.

For another example, when the inference device is an access network device, a configured DRX configuration model may perform inference based on service traffic of a terminal device, to obtain a DRX configuration and a predicted value of a packet delay of the terminal device in the DRX configuration. DRX is an energy saving policy for reducing power consumption of a terminal device. A terminal device on which the DRX configuration is used receives downlink data and signaling in only a necessary time period, and stops receiving downlink data and signaling in another time period, to implement energy saving. The function of the machine learning model in this embodiment of this application is not specifically limited.

It should be further noted that the inference device may further perform a corresponding step based on the inference output. For example, after a load prediction model performs inference, when an obtained inference output is a predicted value of a downlink physical resource block (physical resource block, PRB) utilization rate of a neighboring cell, a source access network device may select a neighboring cell as a target cell, and hand over a terminal device served by the source access network device to the target cell. If the inference output is that a predicted value of a downlink PRB utilization rate of a neighboring cell 1 is 60% after the terminal device is handed over to the cell 1, a predicted value of a downlink PRB utilization rate of a neighboring cell 2 is 70% after the terminal device is handed over to the cell 2, and a predicted value of a downlink PRB utilization rate of a neighboring cell 3 is 80% after the terminal device is handed over to the cell 3, the source access network device may select the neighboring cell 1 as the target cell.

For another example, after a CCO model performs inference, when an obtained inference output is a cell coverage configuration and a predicted value of a packet delay of a terminal device in the cell, a source access network device may select a cell coverage configuration to configure the cell. If the inference output is that a predicted value of the packet delay of the terminal device in the cell in a cell coverage configuration 1 is 5 milliseconds (millisecond, ms), a predicted value of the packet delay of the terminal device in the cell in a cell coverage configuration 2 is 8 ms, and a predicted value of the packet delay of the terminal device in the cell in a cell coverage configuration 3 is 10 ms, the source access network device may select the cell coverage configuration 1 to configure the cell.

For another example, after a DRX configuration model performs inference, when an obtained inference output is a DRX configuration and a predicted value of a packet delay of a terminal device in the DRX configuration, an access network device may select a DRX configuration as an energy saving configuration of the terminal device. If the inference output is that a predicted value of the packet delay of the terminal device in a DRX configuration 1 is 1 ms, a predicted value of the packet delay of the terminal device in a DRX configuration 2 is 2 ms, and a predicted value of the packet delay of the terminal device in a DRX configuration 3 is 5 ms, the access network device may select the DRX configuration 1 as the energy saving configuration of the terminal device. A corresponding step performed by the inference device based on the inference output in this embodiment of this application is not specifically limited.

S502: The inference device sends a first message (measurement request) to a measurement device. Correspondingly, the measurement device receives the first message (measurement request) from the inference device.

The first message is used to request the measurement device to perform measurement, the first message includes a measurement object or the inference output, the measurement object is determined based on the inference output, the first message may be a measurement request, and the first message is used to request to obtain a measurement result obtained after the measurement device measures the measurement object.

For example, the measurement device may be the target access network device shown in FIG. 2. After the source access network device obtains the inference output, the source access network device may send the first message to the target access network device. For a specific implementation in which the source access network device sends the first message to the target access network device, refer to the following method embodiment shown in FIG. 8. Details are not described herein.

Optionally, the measurement device may alternatively be the terminal device shown in FIG. 3. After the access network device obtains the inference output, the access network device may send the first message to the terminal device. For a specific implementation in which the access network device sends the first message to the terminal device, refer to the following method embodiment shown in FIG. 9. Details are not described herein.

It should be noted that the measurement object may be determined by the inference device based on the inference output. After receiving the first message, the measurement device may perform measurement based on the measurement object to obtain the measurement result. The measurement result may reflect a real situation corresponding to the inference output. The measurement result and the corresponding inference output are used to evaluate the machine learning model.

An attribute of the measurement object is consistent with an attribute of the inference output. The inference output may be inference data in an actual scenario, and the measurement object may be data that needs to be measured and that corresponds to the inference data in the actual scenario.

For example, when the inference output is predicted load information of a neighboring cell, a source access network device may determine that the measurement object is load information of the neighboring cell after a terminal device is handed over to the neighboring cell. When the inference output is a predicted value of an uplink/downlink packet loss rate and/or a predicted value of a packet delay of a terminal device in a cell, a source access network device may determine that the measurement object is an uplink/downlink packet loss rate and/or a packet delay of the terminal device in the cell after the cell coverage configuration is used. When the inference output is a DRX configuration and a predicted value of a packet delay of a terminal device in the DRX configuration, an access network device may determine that the measurement object is a packet delay of the terminal device after the DRX configuration is used.

Therefore, the measurement result may be real data that is obtained by the measurement device through measurement and that corresponds to the inference data in an actual scenario, that is, actual data corresponding to the inference output. Whether the inference output of the machine learning model is accurate can be learned and a generalization capability of the machine learning model can be reflected by comparing the measurement result with the corresponding inference output, that is, determining a difference between the inference data and the real data in the actual scenario through comparison, to evaluate the machine learning model, and further update the corresponding machine learning model based on an evaluation result, thereby improving model performance. For a specific implementation of updating the machine learning model based on the evaluation result, refer to the following S506. Details are not described herein.

It should be noted that, if the first message carries the measurement object but does not carry the inference output, the measurement device may directly perform measurement based on the measurement object. If the first message carries the inference output but does not carry the measurement object, the measurement device may determine the corresponding measurement object based on the inference output in the measurement request, to perform measurement based on the measurement object. In this embodiment of this application, an execution body for determining the measurement object is not specifically limited.

In a possible design solution, when the inference device is a source access network device, and the measurement device is a target access network device, if an Xn interface exists between the source access network device and the target access network device, the source access network device may send the first message to the target access network device by using an Xn application protocol (Xn application protocol, XnAP) message. In other words, the first message sent by the source access network device to the target access network device may be the XnAP message.

For example, when the measurement object is load information of a neighboring cell after a terminal device is handed over to the neighboring cell, the first message may be a handover request (handover request) message. When the measurement object is an uplink/downlink packet loss rate and/or a packet delay of a terminal device in a cell after a cell coverage configuration is used, the first message may be a next generation radio access network node configuration update (NG-RAN node configuration update) message.

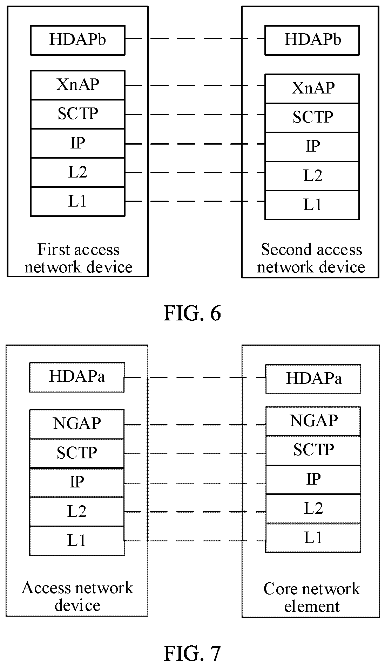

The source access network device and the target access network device may send information based on an existing protocol stack, or may send information by using a new protocol stack. For example, the source access network device and the target access network device may transmit the first message (measurement request) by using a high data analytics protocol type b (high data analytics protocol type b, HDAPb) shown in FIG. 6. FIG. 6 is a diagram 1 of a protocol architecture according to an embodiment of this application. An HDAPb protocol layer shown in FIG. 6 supports functions such as data transmission (for example, data segmentation and data sorting) and data security (for example, data integrity protection, data encryption, and data decryption) between a first access network device and a second access network device. HDAPb uses a service provided by XnAP, that is, an HDAPb message may be carried in an XnAP message. The first access network device may be the source access network device shown in FIG. 2, and the second access network device may be the target access network device shown in FIG. 2.

In another possible design solution, when the inference device is a source access network device, and the measurement device is a target access network device, if there is no Xn interface between the source access network device and the target access network device, the source access network device may send the first message to a core network element by using a next generation application protocol (next generation application protocol, NGAP) message. Correspondingly, the core network element may receive the first message from the source access network device by using the NGAP message, and then send the first message to the target access network device by using an NGAP message. In other words, both the first message sent by the source access network device to the core network element and the first message sent by the core network element to the target access network device may be NGAP messages.

For example, when the measurement object is load information of a neighboring cell after a terminal device is handed over to the neighboring cell, the first message sent by the source access network device to the core network element may be a handover required (handover required) message, and the first message sent by the core network element to the target access network device may be a handover request (handover request) message. When the measurement object is an uplink/downlink packet loss rate and/or a packet delay of a terminal device in a cell after a cell coverage configuration is used, the first message sent by the source access network device to the core network element may be an uplink radio access network configuration transfer (uplink RAN configuration transfer) message, and the first message sent by the core network element to the target access network device may be a downlink radio access network configuration transfer (downlink RAN configuration transfer) message.

The source access network device and/or the target access network device and the core network element may send information based on an existing protocol stack, or may send information by using a new protocol stack. For example, the source access network device and/or the target access network device may transmit the first message (measurement request) with the core network element by using a high data analytics protocol annex (high data analytics protocol annex, HDAPa) shown in FIG. 7. FIG. 7 is a diagram 2 of a protocol architecture according to an embodiment of this application. An HDAPa protocol layer shown in FIG. 7 supports functions such as data transmission (for example, data segmentation and data sorting) and data security (for example, data integrity protection, data encryption, and data decryption) between an access network device and a core network element. HDAPb uses a service provided by NGAP, that is, an HDAPa message may be carried in an NGAP message. The access network device may be the source access network device or the target access network device shown in FIG. 2, and the core network element may be any one of the foregoing core network elements, such as an AMF network element or an NWDAF network element.

In another possible design solution, when the inference device is an access network device, and the measurement device is a terminal device, the access network device may send the first message to the terminal device by using an RRC message, that is, the first message sent by the access network device to the terminal device may be an RRC message.

For example, when the measurement object is a packet delay of a terminal device after a DRX configuration is used, the first message may be an RRC setup message, an RRC reconfiguration message, or an RRC resume message.

S503: The measurement device sends the measurement result to the inference device. Correspondingly, the inference device receives the measurement result from the measurement device.

For example, the measurement device may perform measurement based on the measurement object to obtain the measurement result, and then return the corresponding measurement result to the inference device.

Optionally, if the measurement device is a target access network device in S502, after the target access network device obtains the measurement result, the target access network device may send the measurement result to a source access network device. For a specific implementation in which the target access network device sends the measurement result to the source access network device, refer to the following method embodiment shown in FIG. 8. Details are not described herein.

Optionally, if the measurement device is a terminal device in S502, after the terminal device obtains the measurement result, the terminal device may send the measurement result to an access network device. For a specific implementation in which the terminal device sends the measurement result to the access network device, refer to the following method embodiment shown in FIG. 9. Details are not described herein. A specific implementation in which the measurement device sends the measurement result to the inference device is similar to the specific implementation in which the inference device sends the first message to the measurement device in S502, and details are not described herein.

It should be noted that, after obtaining the measurement result, the measurement device may immediately return the corresponding measurement result to the inference device, or may periodically return a plurality of measurement results to the inference device. Each measurement result includes a moment at which the measurement result is obtained or a measurement time. The inference device establishes a correspondence between a measurement result and an inference output based on a difference between moments at which the plurality of measurement results are obtained or a difference between measurement moments, to evaluate the machine learning model.

Optionally, the measurement result is included in a second message. If the first message further includes a transaction (transaction) identifier, the second message may further include the transaction identifier. The transaction identifier corresponds to the measurement result.

For example, the transaction identifier is used to identify an inference transaction of the machine learning model, that is, identify the inference input used by the inference device in an inference process of the machine learning model and the inference output obtained after corresponding inference. After receiving the foregoing transaction identifier, the measurement device may establish a correspondence between the transaction identifier and the measurement result corresponding to the inference output. The measurement device may return a plurality of measurement results and a transaction identifier corresponding to each measurement result to the inference device at intervals of specific duration. In this way, the inference device may quickly correspond the inference output to the measurement result based on a correspondence between a transaction identifier and an inference output and a correspondence between a transaction identifier and a measurement result, to further improve evaluation efficiency of the machine learning model.

For example, the transaction identifier may be used to identify the inference output. The measurement device may establish a correspondence between the transaction identifier and the measurement result corresponding to the inference output. When receiving a plurality of measurement results and corresponding transaction identifiers, the inference device may determine, based on the transaction identifier, the measurement result corresponding to the inference output.

S504: The inference device determines an evaluation result of the machine learning model based on the inference output and the measurement result.

For example, the evaluation result may be determined by the inference device based on the inference output and the measurement result, the measurement result corresponds to the inference output, and the evaluation result may be used to represent a generalization capability of the machine learning model.

After obtaining the inference output and the measurement result, the inference device may compare the inference output with the corresponding measurement result, that is, determine a difference between the inference data and the real data in the actual scenario through comparison, and evaluate the machine learning model based on the comparison result, to obtain the evaluation result. If the inference output is consistent with the measurement result, an inference process in which the machine learning model obtains the inference output based on the inference input may be marked as "prediction correct", indicating that the machine learning model can obtain an accurate output based on new data, and the evaluation result is that the machine learning model has a good generalization capability. If the inference output is inconsistent with the measurement result, the foregoing inference process of the machine learning model may be marked as "prediction incorrect", indicating that the machine learning model cannot obtain an accurate output based on new data, and the evaluation result is that the machine learning model has a poor generalization capability.

In this way, the inference device can accurately evaluate a generalization capability of the machine learning model, to resolve a problem that evaluation is inaccurate when a same preset data set is used for both model evaluation and model training, thereby improving model evaluation accuracy and efficiency.

Specifically, the evaluation result includes accuracy of the machine learning model.

For example, the accuracy (accuracy) of the machine learning model may also be referred to as precision, and may be data obtained by the inference device through calculation based on a result of comparison between a plurality of inference outputs and corresponding measurement results. The accuracy of the machine learning model may also be used to evaluate the machine learning model. More comparison results used to determine the accuracy of the machine learning model, that is, a larger quantity of samples used for model evaluation, indicate that the generalization capability of the machine learning model can be evaluated more accurately

Optionally, the accuracy of the machine learning model may be an error rate, that is, a ratio of a quantity of samples marked as "prediction incorrect" to a total quantity of samples. A sample may be an inference input corresponding to a group including an inference output and a measurement result whose comparison result is "consistent", and a sample marked as "prediction incorrect" is an inference input corresponding to a group including an inference output and a measurement result whose comparison result is "inconsistent". A lower error rate of the machine learning model indicates a better generalization capability of the machine learning model. On the contrary, a higher error rate of the machine learning model indicates a poorer generalization capability of the machine learning model.

Optionally, the accuracy of the machine learning model may be a correctness rate, that is, a ratio of a quantity of samples marked as "prediction correct" to a total quantity of samples. A sample marked as "prediction correct" is an inference input corresponding to a group including an inference output and a measurement result whose comparison result is "consistent". A higher correctness rate of the machine learning model indicates a better generalization capability of the machine learning model. On the contrary, a lower correctness rate of the machine learning model indicates a poorer generalization capability of the machine learning model.

It should be noted that, when the machine learning model is a neural network, the machine learning model may obtain a plurality of inference outputs and a prediction probability corresponding to each inference output based on one inference output. In this case, the correctness rate may be a top-1 accuracy rate, that is, an accuracy rate that an inference output whose prediction probability ranks first is consistent with an actual result. In a process of comparing an inference output with a measurement result, if the measurement result is consistent with the inference output whose prediction probability ranks first, a sample corresponding to the inference output may be marked as "prediction correct", to determine the top-1 accuracy rate by using a ratio of a quantity of samples marked as "prediction correct" to a total quantity of samples.

The correctness rate may alternatively be top-5 accuracy rates, that is, accuracy rates that inference outputs whose prediction probabilities rank first to fifth include an actual result. In a process of comparing an inference output with a measurement result, if the measurement result is consistent with one of the inference outputs whose prediction probabilities rank first to fifth, a sample corresponding to the inference output may be marked as "prediction correct", to determine the top-5 accuracy rate by using a ratio of a quantity of samples marked as "prediction correct" to a total quantity of samples.

S505: The inference device sends the evaluation result to the update device. Correspondingly, the update device receives the evaluation result from the inference device.

For example, the inference device may directly send the evaluation result to the update device after obtaining the evaluation result, so that the update device updates the machine learning model based on the evaluation result. When the inference device is a source access network device or an access network device, and the update device is a core network element, the inference device may send the evaluation result to the update device by using an NG interface. For a specific implementation in which the inference device sends the evaluation result to the update device, refer to the protocol architecture shown in FIG. 6 or FIG. 7. Details are not described herein again.

In a possible design solution, the evaluation result may be carried in a third message, and the third message may further include the inference input and the measurement result.

For example, the inference input and the corresponding measurement result may form a verification data set. When subsequently determining that the machine learning model needs to be updated, the update device may retrain the machine learning model by using the verification data set, to determine second configuration information of the machine learning model. For specific implementations of the inference input and the measurement result, refer to the following S506. Details are not described herein.

Optionally, the third message may further include a model identifier.

For example, the model identifier is used to distinguish between different machine learning models. If the update device receives a plurality of third messages, the update device may determine, based on the model identifier, a specific machine learning model corresponding to the evaluation result, to subsequently retrain the corresponding machine learning model based on the evaluation result, and determine the second configuration information. For example, the third message received by the update device includes the evaluation result and a model identifier 1, and the model identifier 1 is used to identify an AlexNet model. In this case, the update device may determine, based on the model identifier 1, that the evaluation result corresponds to the AlexNet model, so that the update device subsequently determines, based on the evaluation result, whether the AlexNet model needs to be retrained, to obtain new parameters of the AlexNet model and a connection relationship and weights of the parameters after training, that is, determine second configuration information of the AlexNet model.

It should be noted that if S500 is performed, the update device may directly determine, based on the third message from the inference device, the machine learning model corresponding to the evaluation result. If S500 is not performed, the update device may determine, based on the model identifier carried in the third message, the machine learning model corresponding to the evaluation result.

S506: The update device determines, based on the evaluation result, whether the machine learning model needs to be updated.

For example, the update device may determine, based on the evaluation result, whether the machine learning model needs to be updated, and then determine the second configuration information of the machine learning model when the machine learning model needs to be updated. If the evaluation result is that the machine learning model has a poor generalization capability, the generalization capability of the machine learning model in the inference device needs to be improved. The update device may retrain the machine learning model by using a new data set, to determine the second configuration information.

The new data set may include a marked sample that is not used. The update device may pre-store the new data set, or may obtain the new data set from another network element. A source of the new data set in this embodiment of this application is not specifically limited.

For example, the new data set may be a verification data set, and the verification data set may include the inference input and the measurement result. The update device may use a combination of the inference input and the measurement result as an example (example), use the corresponding measurement result as a label (label) of the inference input, and train the machine learning model by using the example, to obtain the second configuration information. In this way, the inference input and the measurement result are directly used as the new data set to retrain the machine learning model, so that the generalization capability of the machine learning model can be accurately and quickly improved.

If the evaluation result is that the machine learning model has a good generalization capability, the machine learning model in the inference device does not need to be updated, and the update device does not need to retrain the machine learning model based on a new data set, and does not need to determine the second configuration information.

Specifically, if the evaluation result includes the accuracy of the machine learning model, the update device may determine the second configuration information based on the accuracy

For example, if the accuracy of the machine learning model is a correctness rate, the update device may determine, based on a result of comparison between a preset correctness threshold and the correctness rate of the machine learning model, whether the second configuration information needs to be determined.

If the correctness rate of the machine learning model is greater than or equal to the preset correctness threshold, the machine learning model in the inference device does not need to be updated, and the second configuration information does not need to be determined. If the correctness rate of the machine learning model is less than the preset correctness threshold, the machine learning model in the inference device needs to be updated, and the update device may retrain the machine learning model based on the new data set, to determine the second configuration information.

Optionally, if the accuracy of the machine learning model is an error rate, the update device may determine, based on a result of comparison between a preset error threshold and the correctness rate of the machine learning model, whether the second configuration information needs to be determined.

If the error rate of the machine learning model is less than the preset error threshold, the machine learning model in the inference device does not need to be updated, and the second configuration information does not need to be determined. If the error rate of the machine learning model is greater than or equal to the preset error threshold, the machine learning model in the inference device needs to be updated, and the update device may retrain the machine learning model based on the new data set, to determine the second configuration information.

It should be noted that the second configuration information may be configuration information obtained by the update device by retraining the machine learning model by using the new data set. The second configuration information may be used by the inference device to update the parameters of the machine learning model and the connection relationship and weights of the parameters, to improve the generalization capability of the machine learning model, or may be used by another inference device to deploy a new machine learning model based on the second configuration information. A specific implementation of the second configuration information is similar to that of the first configuration information, and details are not described herein again.

It should be noted that, the inference device and the update device respectively perform evaluation and update for the machine learning model, so that when there are a plurality of inference devices, it can be ensured that each inference device can evaluate a locally deployed machine learning model in a timely manner, thereby reducing data processing pressure of the update device. Therefore, the machine learning model can be quickly updated based on the evaluation result, so that machine learning model update efficiency is improved. In addition, workload of all parties can be balanced through cooperation of the inference device and the update device, to ensure that resources in the inference device and the update device can be properly allocated, thereby improving efficiency of evaluating the machine learning model. Further, the resources in the inference device and the update device are properly allocated, so that the inference device and the update device can use remaining resources to perform other tasks, thereby improving network resource utilization and overall working efficiency.

S507: The update device sends the second configuration information to the inference device. Correspondingly, the update device receives the second configuration information from the inference device.

For example, after receiving the second configuration information of the machine learning model, the inference device may update the machine learning model based on the second configuration information. For example, the inference device may adjust the parameters of the machine learning model and the connection relationship and weights of the parameters based on the second configuration information, to improve the generalization capability of the machine learning model.

It should be noted that if the update device may determine, based on the evaluation result, that the machine learning model needs to be updated, and then determine the second configuration information of the machine learning model, the update device may send the second configuration information to the inference device, and may perform S507. If the update device determines, based on the evaluation result, that the machine learning model does not need to be updated, that is, the second configuration information does not need to be determined, the update device does not need to send the second configuration information to the inference device, and may not perform S507. In other words, S507 is an optional step.

According to the foregoing steps in this embodiment, the update device can learn of the evaluation result for the machine learning model of the inference device, and the evaluation result can accurately reflect the generalization capability of the machine learning model. Further, the update device may update the machine learning model in a timely manner based on the accurate evaluation result, to improve inference accuracy of the machine learning model.

The following uses the communication system shown in FIG. 2 as an example to describe in detail specific implementation of the model evaluation method in embodiments of this application in the communication system.

For example, FIG. 8 is a schematic flowchart 2 of a model evaluation method according to an embodiment of this application. The model evaluation method is applicable to the communication system shown in FIG. 2, to specifically implement the model evaluation method shown in FIG. 5.

The inference device shown in FIG. 5 may be a source access network device shown in FIG. 8. The measurement device shown in FIG. 5 may be a target access network device shown in FIG. 8. The update device shown in FIG. 5 may be a network device shown in FIG. 8.

As shown in FIG. 8, the model evaluation method may include the following S800 to S807.

S800: The network device sends first configuration information of a machine learning model to the source access network device. Correspondingly, the source access network device receives the first configuration information from the network device.

Specifically, the source access network device may determine parameters of the machine learning model and a connection relationship and weights of the parameters based on the first configuration information, to deploy the corresponding machine learning model. For a specific implementation of the first configuration information, refer to S501. Details are not described herein again.

It should be noted that the source access network device may alternatively directly obtain pre-received first configuration information from a cache. In other words, if the network device has sent the first configuration information to the source access network device, the network device does not need to send the first configuration information to the source access network device again. In this case, S800 may be considered as an optional step.

S801: The source access network device determines an inference output of the machine learning model based on an inference input of the machine learning model.

Specifically, the source access network device may determine the machine learning model based on the first configuration information of the machine learning model, to obtain the corresponding inference input. Then, the source access network device performs inference on the inference input by using the machine learning model, to obtain the corresponding inference output.

An example in which the machine learning model is a load prediction model is used for description. The source access network device may use load information of a neighboring cell, load information of a terminal device, and neighboring cell coverage information measured by the terminal device as the inference input. The source access network device may obtain, through calculation by using the machine learning model based on the foregoing inference input, a predicted value of the load information of the neighboring cell in which the terminal device is located after the terminal device is handed over to the neighboring cell. In this case, the inference output is predicted load information of the neighboring cell.

The load information of the neighboring cell may include but is not limited to one or more of the following information: a radio resource status (radio resource status), a transport layer capacity indicator (transport layer capacity indicator), a composite available capacity group (composite available capacity group), a slice available capacity (slice available capacity), a quantity of UEs in an active state (number of active UEs), and an RRC connection (RRC connections). The load information of the terminal device may be a PRB utilization rate of uplink/downlink traffic of the terminal device. The neighboring cell coverage information measured by the terminal device may include a reference signal received power (reference signal receiving power, RSRP) measurement result, a reference signal received quality (reference signal receiving quality, RSRQ) measurement result, and a channel state information reference signal (channel state information reference signal, CSI-RS) measurement result of the neighboring cell that are obtained by the terminal device through measurement.

For example, the radio resource status may include a physical resource block (physical resource block, PRB) utilization rate of uplink/downlink traffic. The transport layer capacity indicator may be used to indicate an available capacity provided by a transport network. The composite available capacity group may be used to indicate an uplink/downlink overall available resource level. For example, 0 indicates that there is no available resource, and 100 indicates a maximum available resource. The slice available capacity may be a ratio of an available resource of each network slice in each cell of the source access network device to a total resource of the cell. The quantity of UEs in the active state may be an average quantity of users or a maximum quantity of users who are using applications to send and receive data in uplink, downlink, or uplink and downlink. The RRC connection may include a quantity of RRC connections and an available RRC connection capacity value. The available RRC connection capacity value may be a remaining percentage of the quantity of RRC connections relative to a maximum quantity of RRC connections supported by a cell. For example, 0 indicates that there is no available capacity, and 100 indicates a maximum available capacity.

Further, an example in which the machine learning model is a CCO model is used for description. The source access network device may use, as the inference input, coverage configuration information of a cell and at least one of the following cell information: load information, an uplink/downlink packet loss rate (packet loss rate), a packet delay (packet delay), and a data volume (data volume). Optionally, the inference input may further include coverage information of a terminal device accessing the cell. The source access network device may obtain, through calculation by using the machine learning model based on the inference input, a predicted value of an uplink/downlink packet loss rate and/or a packet delay of the terminal device accessing the cell after a corresponding cell coverage configuration is used. In this case, the cell coverage configuration and the predicted value of the uplink/downlink packet loss rate and/or the packet delay of the terminal device are the inference output.

It may be noted that using the corresponding cell configuration for the cell is equivalent to changing a communication coverage area of the cell. Correspondingly, the terminal device may need to perform cell handover. For example, it is assumed that the terminal device is located in an overlapping area between a coverage area of a cell A and a coverage area of a cell B, and the terminal device communicates with a source access network device corresponding to the cell A. After a corresponding cell configuration is used for the cell A, when the communication coverage area of the cell A becomes smaller, and the terminal device is located in only the coverage area of the cell B, the terminal device needs to be handed over from the source access network device corresponding to the cell A to a target access network device corresponding to the cell B.

For example, the coverage configuration information of the cell may include: downlink transmit power (downlink transmit power), an antenna tilt (antenna tilt), and an antenna azimuth (antenna azimuth) of the cell. The cell configuration information is used to limit a signal coverage area of the cell. The antenna tilt α refers to an included angle between an antenna and a vertical plane, and may be obtained through calculation according to a height H, a coverage radius D, and a half-power angle β/2 of an access network device by using a tilt calculation formula, for example, α = arctan(H/D) + β/2. The half-power angle refers to an included angle between two points at which a power flux density decreases to half relative to a maximum radiation direction on a plane including the maximum radiation direction of a main lobe in a power pattern. The antenna azimuth refers to an angle by which a north plane is clockwise rotated to coincide with a plane on which the antenna is located.

It should be noted that the source access network device may further perform a corresponding step based on the inference output. For example, when the inference output is predicted load information of a neighboring cell, the source access network device may select a neighboring cell as a target cell. When the inference output is a predicted value of a packet delay of the terminal device in the cell, the source access network device may select a cell coverage configuration corresponding to the predicted value of the packet delay for configuration. For a specific implementation in which the source access network device performs the corresponding step based on the inference output, refer to S501. Details are not described herein again.

S802: The source access network device sends a measurement request to the target access network device. Correspondingly, the target access network device receives the measurement request from the source access network device.

The measurement request includes a measurement object or the inference output, the measurement request may be used to request the target access network device to measure the measurement object, and the measurement object corresponds to the inference output. For example, when the inference output is predicted load information of a neighboring cell, the measurement object is load information of the neighboring cell. The load information of the neighboring cell may include but is not limited to: a radio resource status, a transport layer capacity indicator, a composite available capacity group, a slice available capacity, a quantity of UEs in an active state, and an RRC connection of the cell. For another example, when the inference output is a predicted value of a packet delay of the terminal device in the cell, the measurement object may be an uplink/downlink packet loss rate and/or a packet delay of the terminal device in the cell. For a specific implementation in which the source access network device sends the measurement request to the target access network device, refer to S502. Details are not described herein again.

S803: The target access network device sends a measurement result to the source access network device. Correspondingly, the source access network device receives the measurement result from the target access network device.

S804: The source access network device determines an evaluation result of the machine learning model based on the inference output and the measurement result.

S805: The source access network device sends the evaluation result to the network device. Correspondingly, the network device receives the evaluation result from the source access network device.

S806: The network device determines, based on the evaluation result, whether the machine learning model needs to be updated.

S807: The network device sends second configuration information of the machine learning model to the source access network device. Correspondingly, the source access network device receives the second configuration information of the machine learning model from the network device.

For specific implementations of S803 to S807, refer to S503 to S507, and details are not described herein again.

According to the foregoing steps in this embodiment, the network device can learn of the evaluation result for the machine learning model of the source access network device, and the evaluation result can accurately reflect a generalization capability of the machine learning model. Further, the network device may update the machine learning model in a timely manner based on the accurate evaluation result, to improve inference accuracy of the machine learning model.

The following uses the communication system shown in FIG. 3 as an example to describe in detail specific implementation of the model evaluation method in embodiments of this application in the communication system.

For example, FIG. 9 is a schematic flowchart 3 of a model evaluation method according to an embodiment of this application. The model evaluation method is applicable to the communication system shown in FIG. 2, to specifically implement the model evaluation method shown in FIG. 5.

The inference device shown in FIG. 5 may be an access network device shown in FIG. 9. The measurement device shown in FIG. 5 may be a terminal device shown in FIG. 9. The update device shown in FIG. 5 may be a network device shown in FIG. 9.

As shown in FIG. 9, the model evaluation method may include the following S900 to S907.

S900: The network device sends first configuration information of a machine learning model to the access network device.

For a specific implementation of S900, refer to S800. Details are not described herein again.

S901: The access network device determines an inference output of the machine learning model based on an inference input of the machine learning model.

For example, the access network device may determine a function of the machine learning model or a type of the machine learning model based on the first configuration information of the machine learning model, to obtain the corresponding inference input. Then, the access network device performs inference, that is, prediction and/or calculation, on the inference input based on the machine learning model, to obtain the corresponding inference output.

An example in which the machine learning model is a DRX configuration model is used for description. The access network device may use service traffic of a terminal device as the inference input. The access network device may obtain, through calculation based on the inference input by using the machine learning model, a DRX configuration that can be used for the terminal device and a predicted value of a packet delay of the terminal device after the DRX configuration is used. In this case, the inference output is the DRX configuration and the predicted value of the packet delay of the terminal device in the DRX configuration.

For example, the terminal device for which the DRX configuration is used enables a receiver, enters an active state, and receives downlink data and signaling in only a necessary time period, and disables the receiver, enters an inactive state, and stops receiving downlink data and signaling in another time period, thereby saving energy.

Optionally, the service traffic of the terminal device may include a data volume (data volume), an IP throughput (IP throughput), a distribution of the IP throughput (distribution of IP throughput), cell coverage information measured by the terminal device, and/or the like.

For example, the data volume may represent a size of downlink data sent by the access network device to the terminal device, or represent a size of uplink data received by the access network device from the terminal device in a period of time. The IP throughput may represent an average size of uplink/downlink data of the terminal device within a period of time. The distribution of the IP throughput may represent an average size of uplink/downlink data of the terminal device in each of a plurality of time periods. The cell coverage information measured by the terminal device may include an RSRP measurement result, an RSRQ measurement result, a CSI-RS measurement result, or the like of the cell.

Optionally, the DRX configuration may include an on-duration timer (on duration timer), an inactivity timer (inactivity timer), an uplink/downlink hybrid automatic repeat request round trip time timer (hybrid automatic repeat request round trip time timer), an uplink/downlink retransmission timer (retransmission timer), a long cycle start offset (long cycle start offset), and short DRX (short DRX).

For example, the on-duration timer may be used to set a time period in which the terminal device listens to a physical downlink control channel, in a unit of ms or in a unit of 1/32 ms. The inactivity timer may be used to set a time period in which the terminal device determines whether an activator needs to be extended due to arrival of new data, in a unit of ms. The uplink hybrid automatic repeat request round trip time timer may be used to set a minimum value of a time interval from a moment at which the terminal device completes sending of physical uplink shared channel data to a moment at which the terminal device receives a physical downlink control channel uplink grant (grant) next time, in a unit of a time domain symbol (symbol). The downlink hybrid automatic repeat request round trip time timer may be used to set a minimum value of a time interval from a moment at which the access network device receives a hybrid automatic repeat request feedback corresponding to downlink data transmission to a moment at which retransmission corresponding to the downlink data transmission starts, in a unit of a time domain symbol. The uplink retransmission timer may be used to set a maximum waiting time for waiting for uplink retransmission when the terminal device is in an active state, in a unit of a quantity of slot lengths at which a transport block is sent (number of slot lengths where the transport block was transmitted). The downlink retransmission timer may be used to set a maximum waiting time for waiting for downlink retransmission when the terminal device is in an active state, in a unit of a quantity of slot lengths at which a transport block is received (number of slot lengths where the transport block was received). The long cycle start offset may be used to set a quantity of consecutive retransmission times in a long cycle, and the long cycle start offset may include a long cycle in a unit of ms and a start offset in a unit of ms. The short DRX may be used to set a quantity of consecutive retransmission times in a short cycle. The short DRX may include a short cycle (short cycle) in a unit of ms, a slot offset in a unit of 1/32 ms, and a short-cycle timer in a unit of a short cycle. The short-cycle timer may be used to set a maximum time period in which the terminal device switches from the short cycle to a long cycle, in a unit of ms.

It should be noted that the access network device may further perform a corresponding step based on the inference output. For example, when the inference output is a DRX configuration and a predicted value of a packet delay of a terminal device in the DRX configuration, the source access network device may select a DRX configuration corresponding to a smallest predicted value of the packet delay, to configure the terminal device. For a specific implementation in which the access network device performs the corresponding step based on the inference output, refer to S501. Details are not described herein again.

S902: The access network device sends a measurement request to the terminal device.

The measurement request includes a measurement object or the inference output, the measurement request may be used to request the terminal device to measure the measurement object, the measurement request may be used to request a target access network device to measure the measurement object, and the measurement object corresponds to the inference output. For example, when the inference output is a DRX configuration and a predicted value of a packet delay of a terminal device in the DRX configuration, the measurement object is the packet delay of the terminal device. The access network device may send the DRX configuration and the measurement request to the terminal device, to request the terminal device to measure the packet delay of the terminal device in the DRX configuration.

Specifically, the access network device may send the measurement request to the terminal device by using an RRC message. In other words, the access network device sends the RRC message to the terminal device. The RRC message may include the measurement request. When the inference output includes the DRX configuration, the RRC message may further include the corresponding DRX configuration. For a specific implementation of communication between the access network device and the terminal device, refer to S502. Details are not described herein again.

S903: The terminal device sends a measurement result to the access network device.

S904: The access network device determines an evaluation result of the machine learning model based on the inference output and the measurement result.

S905: The access network device sends the evaluation result to the network device.

S906: The network device determines, based on the evaluation result, whether the machine learning model needs to be updated.

S907: The network device sends second configuration information of the machine learning model to the access network device.

For specific implementations of S903 to S907, refer to S503 to S507, and details are not described herein again.

According to the foregoing steps in this embodiment, the network device can learn of the evaluation result for the machine learning model of the access network device, and the evaluation result can accurately reflect a generalization capability of the machine learning model. Further, the network device may update the machine learning model in a timely manner based on the accurate evaluation result, to improve inference accuracy of the machine learning model.

Based on the model evaluation method shown in FIG. 5, FIG. 8, or FIG. 9, the inference device may determine, by comparing the inference output of the machine learning model with an actual measurement result corresponding to the inference output, whether the machine learning model can obtain an accurate output based on data in an actual scenario. In this way, the inference device can accurately evaluate a generalization capability of the machine learning model, to resolve a problem that evaluation is inaccurate when a same preset data set is used for both model evaluation and model training, thereby improving model evaluation accuracy and efficiency.

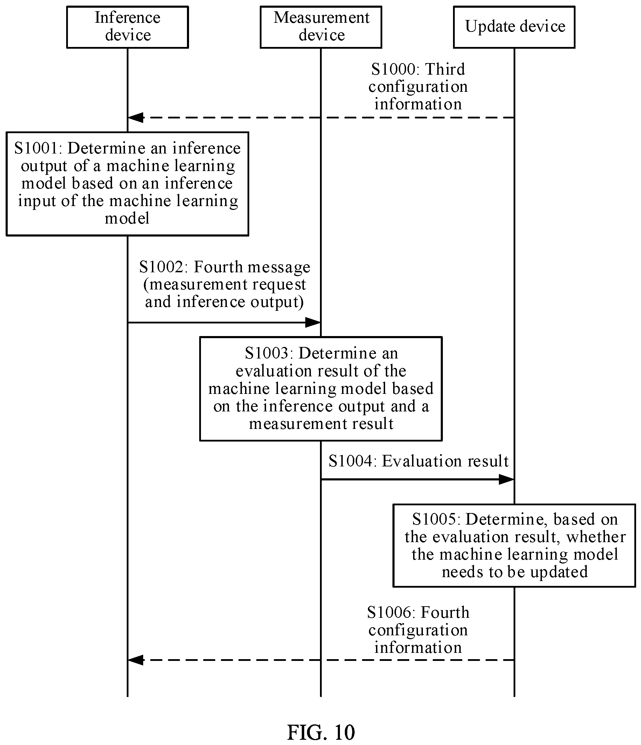

For example, FIG. 10 is a schematic flowchart 4 of a model evaluation method according to an embodiment of this application. The model evaluation method is applicable to the model evaluation system shown in FIG. 1, or applicable to the communication system shown in FIG. 2. The following uses the model evaluation system shown in FIG. 1 as an example for description.

As shown in FIG. 10, the model evaluation method includes the following steps.

S1000: An update device sends third configuration information to an inference device. The third configuration information is used to request the inference device to determine a machine learning model.

For example, the update device may be the network device shown in FIG. 2, and the inference device may be the source access network device shown in FIG. 2. The inference device may determine, based on the third configuration information, the machine learning model that needs to be evaluated, and may further determine, based on the third configuration information, a data set that needs to be input into the machine learning model and an output that should be obtained based on input data.

The third configuration information may include parameters of the machine learning model, and a connection relationship and weights of the parameters. Optionally, the third configuration information may alternatively be source code of the machine learning model, executable program code of the machine learning model, partially or completely compiled code of the machine learning model, or the like.

It should be noted that the inference device may obtain the third configuration information from the update device, or may directly obtain pre-received third configuration information from a cache. In other words, if the update device has sent the third configuration information to the inference device, the update device does not need to send the third configuration information to the inference device again. In this case, S1000 may be considered as an optional step.

Optionally, the third configuration information may further include a model identifier of the machine learning model. For a specific implementation of the model identifier, refer to the specific implementation of the model identifier in S500. Details are not described herein again.

S1001: The inference device determines an inference output of the machine learning model based on an inference input of the machine learning model.

For example, the inference input is a data set determined by the inference device based on the third configuration information in an actual scenario, and the inference output is inference data obtained by the machine learning model through prediction based on the inference input in the actual scenario. For specific implementations of the inference input and the inference output, refer to the specific implementations of the inference input and the inference output in S501. Details are not described herein again.

It should be further noted that the inference device may further perform a corresponding step based on the inference output. For a specific implementation in which the inference device performs the corresponding step based on the inference output, refer to S501. Details are not described herein again.

S1002: The inference device sends a fourth message (measurement request and inference output) to a measurement device. Correspondingly, the measurement device receives the fourth message (measurement request and inference output) from the inference device.

The fourth message is used to provide the inference output and request the measurement device to perform measurement. The fourth message includes the inference output and the measurement request. The fourth message is used to provide the inference output to the measurement device and request the measurement device to measure a measurement object corresponding to the inference output.

For example, the measurement device may determine the measurement object based on the inference output and the measurement request in the fourth message, to perform measurement based on the measurement object, to obtain a measurement result corresponding to the inference output. The measurement result is real data in the actual scenario. The measurement object is data that needs to be measured and that corresponds to the inference data in the actual scenario. For a specific implementation of the measurement object, refer to S502. Details are not described herein again.

Optionally, the measurement request may include the measurement object.

For example, the measurement device may directly perform measurement based on the measurement object in the measurement request, to obtain the measurement result corresponding to the inference output.

Optionally, the fourth message may further include the inference input.

Optionally, the fourth message may further include the model identifier of the machine learning model.

It should be noted that when the inference device is a source access network device, and the measurement device is a target access network device, if there is an Xn interface between the source access network device and the target access network device, the source access network device may send the fourth message to the target access network device by using an XnAP message. If there is no Xn interface, the source access network device may send the fourth message to a core network element by using an NGAP message, and then the core network element sends the fourth message to the target access network device. For a specific implementation in which the inference device sends the fourth message to the measurement device, refer to S502. Details are not described herein again.

S1003: The measurement device determines an evaluation result of the machine learning model based on the inference output and the measurement result.

The measurement result corresponds to the inference output.

For example, the measurement result is actual data obtained by the measurement device through measurement. For a specific implementation in which the measurement device determines the measurement result based on the inference output, refer to S1002. Details are not described herein again. The measurement device may compare the inference output with the corresponding measurement result, that is, determine a difference between the inference data and the real data in the actual scenario through comparison, and then evaluate the machine learning model based on a comparison result, to obtain the evaluation result. If the inference output is consistent with the measurement result, the evaluation result is that the machine learning model has a good generalization capability. If the inference output is inconsistent with the measurement result, the evaluation result is that the machine learning model has a poor generalization capability. For a specific implementation of determining the evaluation result based on the inference output and the corresponding measurement result, refer to S504. Details are not described herein again.

Specifically, the evaluation result includes accuracy of the machine learning model.

For example, the accuracy of the machine learning model may be data, for example, a correctness rate or an error rate, obtained by the measurement device through calculation based on a result of comparison between a plurality of inference outputs and corresponding measurement results. For a specific implementation of the accuracy of the machine learning model, refer to S504. Details are not described herein again.

S1004: The measurement device sends the evaluation result to the update device. Correspondingly, the update device receives the evaluation result from the measurement device.

Optionally, if the fourth message may further include the inference input of the machine learning model in S1002, the evaluation result may be carried in a fifth message, and the fifth message may further include the inference input and the measurement result. In this way, the update device may construct a verification data set based on the inference input and the measurement result. For specific implementations of the inference input and the measurement result, refer to the following S1005. Details are not described herein.

Optionally, if the fourth message further includes the model identifier of the machine learning model in S1002, the evaluation result may be carried in a fifth message, and the fifth message may further include the model identifier of the machine learning model. In this way, the update device may determine, based on the evaluation result and the corresponding model identifier, the machine learning model corresponding to the evaluation result. For a specific implementation of the model identifier, refer to S505. Details are not described herein again.

S1005: The update device determines, based on the evaluation result, whether the machine learning model needs to be updated.

For example, the update device may determine, based on the evaluation result, whether to update the machine learning model, to determine the fourth configuration information of the machine learning model when the machine learning model needs to be updated. If the evaluation result is that the machine learning model has a poor generalization capability, the update device may retrain the machine learning model by using a new data set, to determine the fourth configuration information. The new data set may include a marked sample that is not used. For example, the new data set may be a verification data set, and the verification data set may include the inference input and the measurement result. For a specific implementation of determining the fourth configuration information based on the new data set, refer to S506. Details are not described herein again.

If the evaluation result is that the machine learning model has a good generalization capability, the machine learning model in the inference device does not need to be updated, and the update device does not retrain the machine learning model based on a new data set, and does not need to determine the fourth configuration information.

Specifically, if the evaluation result includes the accuracy of the machine learning model, the update device may determine the fourth configuration information based on the accuracy.

For example, the update device may alternatively determine, based on a result of comparison between the accuracy and a preset threshold, whether the machine learning model needs to be updated, and further determine whether the fourth configuration information of the machine learning model needs to be determined. For a specific implementation of determining the fourth configuration information based on the result of comparison between the accuracy and the preset threshold, refer to S506. Details are not described herein again.

51006: The update device sends the fourth configuration information to the inference device. Correspondingly, the inference device receives the fourth configuration information from the update device.

For example, after receiving the fourth configuration information of the machine learning model, the inference device may update the machine learning model based on the fourth configuration information. For a specific implementation of the fourth configuration information, refer to the specific implementation of the second configuration information in S507. Details are not described herein again.

It should be noted that if the update device may determine, based on the evaluation result, that the machine learning model needs to be updated, and then determine the fourth configuration information of the machine learning model, the update device may send the fourth configuration information to the inference device, and may perform S1006. If the update device determines, based on the evaluation result, that the machine learning model does not need to be updated, that is, the fourth configuration information does not need to be determined, the update device does not need to send the fourth configuration information to the inference device, and may not perform S1006. In other words, S1006 is an optional step.

It should be noted that, the measurement device and the update device respectively perform evaluation and update for the machine learning model, so that when there are a plurality of measurement devices, it can be ensured that each measurement device can evaluate, in a timely manner, a machine learning model deployed in a corresponding inference device, thereby reducing data processing pressure of the update device. Therefore, the machine learning model can be quickly updated based on an evaluation result, so that machine learning model update efficiency is improved. In addition, workload of all parties can be balanced through cooperation of the measurement device and the update device, thereby improving efficiency of evaluating the machine learning model. Further, the resources in the measurement device and the update device are properly allocated, so that the measurement device and the update device can use remaining resources to perform other tasks, thereby improving network resource utilization and overall working efficiency.

The following uses the communication system shown in FIG. 2 as an example to describe in detail specific implementation of the model evaluation method in embodiments of this application in the communication system.

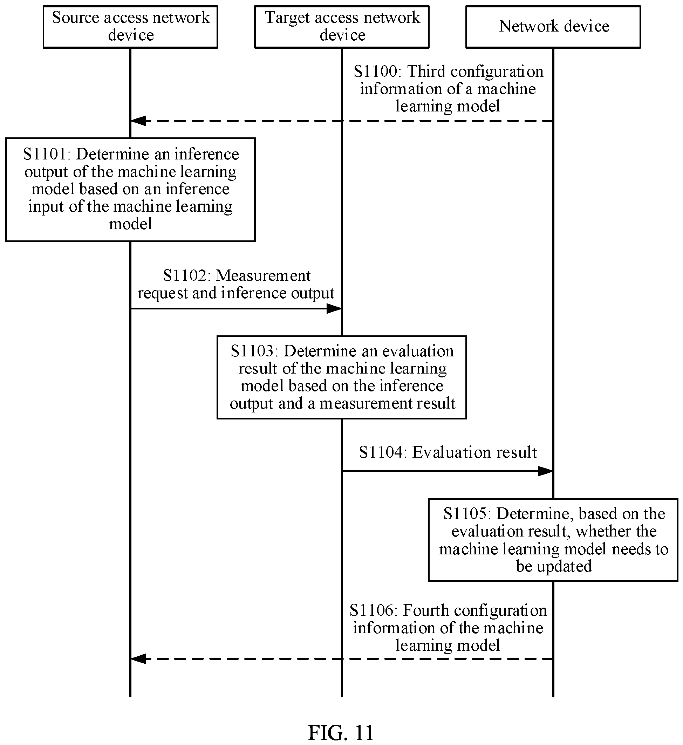

For example, FIG. 11 is a schematic flowchart 5 of a model evaluation method according to an embodiment of this application. The model evaluation method is applicable to the communication system shown in FIG. 2, to specifically implement the model evaluation method shown in FIG. 10.

The inference device shown in FIG. 10 may be a source access network device shown in FIG. 11. The measurement device shown in FIG. 10 may be a target access network device shown in FIG. 11. The update device shown in FIG. 10 may be a network device shown in FIG. 11.

As shown in FIG. 11, the model evaluation method may include the following S 1100 to S1106.

S1100: The network device sends third configuration information of a machine learning model to the source access network device.

S1101: The source access network device determines an inference output of the machine learning model based on an inference input of the machine learning model.

For specific implementations of S1100 and S1101, refer to S1000 and S1001, and details are not described herein again.

S1102: The source access network device sends a measurement request and the inference output to the target access network device. Correspondingly, the target access network device receives the measurement request and the inference output from the source access network device.

The measurement request is used to request a measurement device to measure a measurement object corresponding to the inference output. For specific implementations of the measurement request and the inference output, refer to S1002. Details are not described herein again.

S1103: The target access network device determines an evaluation result of the machine learning model based on the inference output and a measurement result.

S1104: The target access network device sends the evaluation result to the network device. Correspondingly, the network device receives the evaluation result from the target access network device.

51105: The network device determines, based on the evaluation result, whether the machine learning model needs to be updated.

S1106: The network device sends fourth configuration information of the machine learning model to the source access network device.

For specific implementations of S1103 to S1106, refer to S1003 to 51006. Details are not described herein again.

Based on the model evaluation method shown in FIG. 10 or FIG. 11, the measurement device may determine, by comparing the inference output with an actual measurement result corresponding to the inference output, whether the machine learning model can obtain an accurate output based on new data in an actual scenario. In this way, the measurement device can accurately evaluate a generalization capability of the machine learning model, to resolve a problem that evaluation is inaccurate when a same preset data set is used for both model evaluation and model training, thereby improving model evaluation accuracy and efficiency.

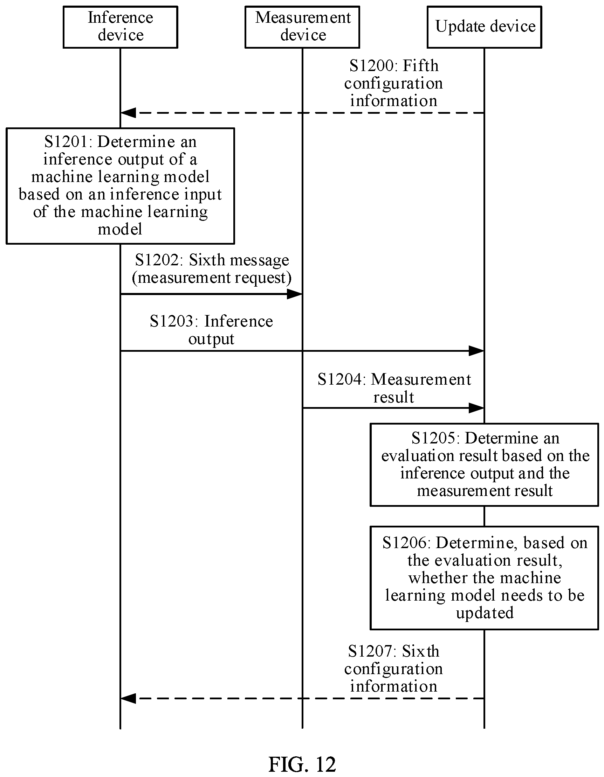

For example, FIG. 12 is a schematic flowchart 6 of a model evaluation method according to an embodiment of this application. The model evaluation method is applicable to the model evaluation system shown in FIG. 1, or applicable to the communication system shown in FIG. 2 or FIG. 3. The following uses the model evaluation system shown in FIG. 1 as an example for description.

As shown in FIG. 12, the model evaluation method includes the following steps.

S1200: An update device sends fifth configuration information to an inference device.

The fifth configuration information is used to request the inference device to determine a machine learning model.

For example, the update device may be the network device shown in FIG. 2 or FIG. 3, and the inference device may be the source access network device shown in FIG. 2, or may be the access network device shown in FIG. 3. The inference device may determine, based on the fifth configuration information, the machine learning model that needs to be evaluated, and may further determine, based on the fifth configuration information, a data set that needs to be input into the machine learning model and an output obtained through inference based on input data.

The fifth configuration information may include parameters of the machine learning model, and a connection relationship and weights of the parameters. Optionally, the fifth configuration information may alternatively be source code of the machine learning model, executable program code of the machine learning model, partially or completely compiled code of the machine learning model, or the like.

It should be noted that the inference device may obtain the fifth configuration information from the update device, or may directly obtain pre-received fifth configuration information from a cache. In other words, if the update device has sent the fifth configuration information to the inference device, the update device does not need to send the fifth configuration information to the inference device again. In this case, S1200 may be considered as an optional step.

Optionally, the fifth configuration information may further include a model identifier of the machine learning model. For a specific implementation of the model identifier, refer to the specific implementation of the model identifier in S500. Details are not described herein again.

S1201: The inference device determines an inference output of the machine learning model based on an inference input of the machine learning model.

For example, the inference input is a data set determined by the inference device based on the fifth configuration information in an actual scenario, and the inference output is inference data obtained by the machine learning model through prediction based on the inference input in the actual scenario. For specific implementations of the inference input and the inference output, refer to the specific implementations of the inference input and the inference output in S501. Details are not described herein again.

In this way, whether the inference output of the machine learning model is accurate can be evaluated, to evaluate a generalization capability of the machine learning model, so as to resolve a problem that evaluation is inaccurate when preset data sets of a same type are used for both model evaluation and model training, thereby improving model evaluation accuracy and efficiency.

S1202: The inference device sends a sixth message (measurement request) to a measurement device. Correspondingly, the measurement device receives the sixth message (measurement request) from the inference device.

The sixth message is used to request the measurement device to perform measurement, the sixth message includes the inference output or a measurement object, the measurement object is determined based on the inference output, the sixth message may be the measurement request, and the sixth message is used to request to obtain a measurement result obtained after the measurement device measures the measurement object.

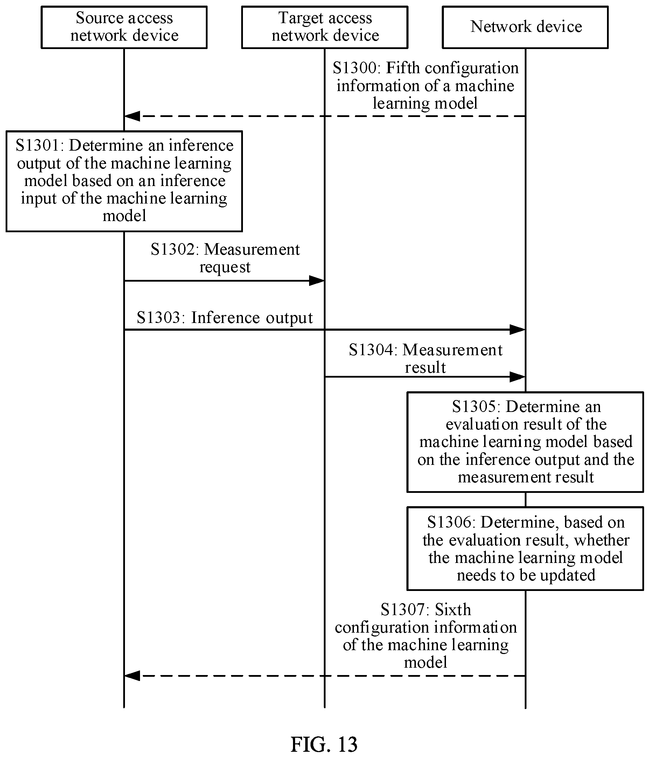

For example, the measurement device may be the target access network device shown in FIG. 2. After the source access network device obtains the inference output, the source access network device may send the sixth message to the target access network device. For a specific implementation in which the source access network device sends the sixth message to the target access network device, refer to the following method embodiment shown in FIG. 13, FIG. 14, or FIG. 15. Details are not described herein.

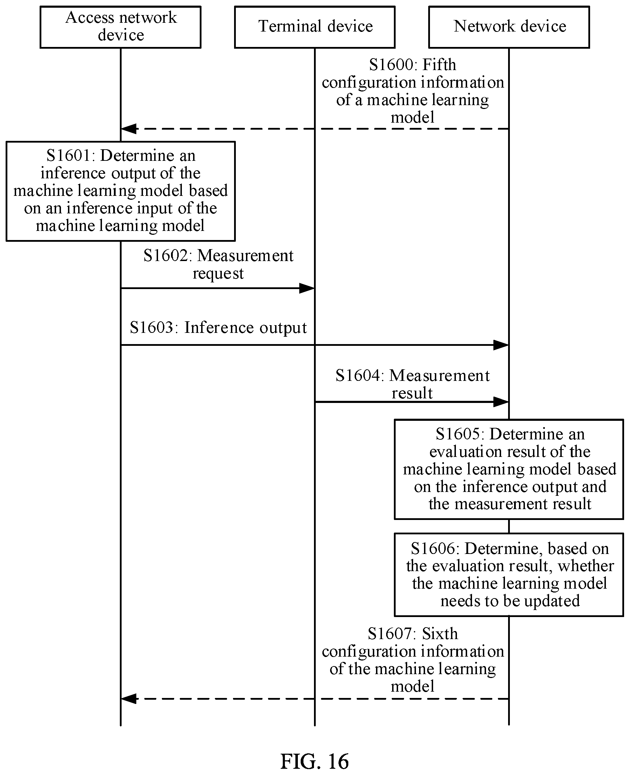

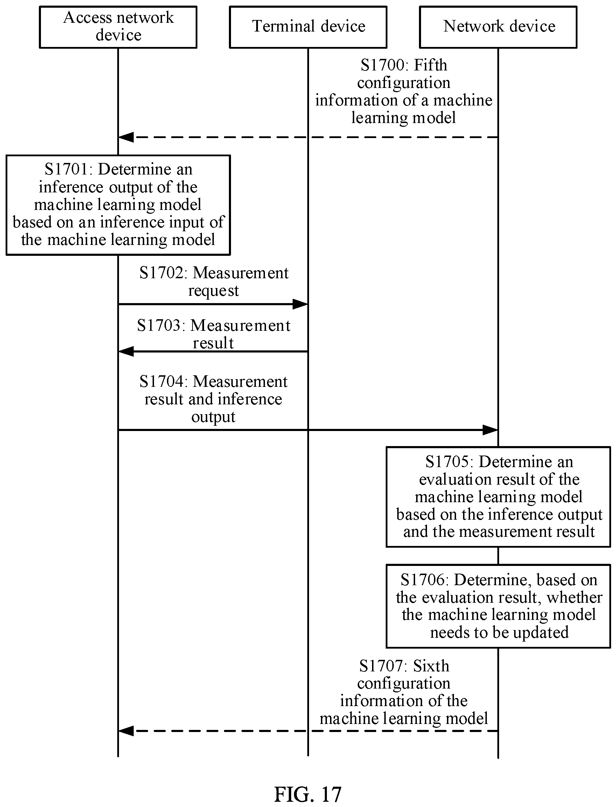

Optionally, the measurement device may alternatively be the terminal device shown in FIG. 3. After the access network device obtains the inference output, the access network device may send the sixth message to the terminal device. For a specific implementation in which the access network device sends the sixth message to the terminal device, refer to the following method embodiment shown in FIG. 16 or FIG. 17. Details are not described herein.

The measurement object may be determined by the inference device based on the inference output. After receiving the sixth message, the measurement device may perform measurement based on the measurement object, to obtain the measurement result. For specific implementations of the measurement object and the measurement result, refer to S502. Details are not described herein again.

It should be noted that, if the sixth message carries the measurement object but does not carry the inference output, the measurement device may directly perform measurement based on the measurement object. If the sixth message carries the inference output but does not carry the measurement object, the measurement device further needs to determine the corresponding measurement object based on the inference output, and then performs measurement based on the measurement object. For a specific implementation of content carried in the sixth message, refer to FIG. 13 to FIG. 17 below. Details are not described herein.

Optionally, the sixth message may further include the inference input.

Optionally, the sixth message may further include the model identifier of the machine learning model. For a specific implementation of content carried in the sixth message, refer to FIG. 13 to FIG. 17 below. Details are not described herein.

In a possible design solution, when the inference device is a source access network device, and the measurement device is a target access network device, if there is an Xn interface between the source access network device and the target access network device, the source access network device may send the sixth message to the target access network device by using an XnAP message. If there is no Xn interface, the source access network device may send the sixth message to a core network element by using an NGAP message, and then the core network element sends the sixth message to the target access network device by using an NGAP message.

In another possible design solution, when the inference device is an access network device, and the measurement device is a terminal device, the access network device may send the sixth message to the terminal device by using an RRC message, that is, the sixth message sent by the access network device to the terminal device may be an RRC message. For a specific implementation in which the inference device sends the sixth message to the measurement device, refer to the specific implementation in which the inference device sends the first message to the measurement device in S502. Details are not described herein again.

S1203: The inference device sends the inference output to the update device.

S1204: The measurement device sends the measurement result to the update device.

For example, the update device may perform model evaluation based on the inference output and the corresponding measurement result. There are the following manners in which the inference device sends the inference output and the measurement device sends the measurement result.

Solution 1: The inference device may send the inference output to the update device, and the measurement device may send the measurement result to the update device. In other words, both S1203 and S1204 are performed.

For example, the inference device directly sends the inference output to the update device. In addition, after obtaining the measurement result, the measurement device directly sends the measurement result to the update device, and does not send the measurement result to the inference device.

Solution 2: The inference device may send the inference output and the measurement result to the update device, and the measurement device may not communicate with the update device. In other words, only S1203 is performed, and S1204 is not performed.

For example, after obtaining the measurement result, the measurement device sends the measurement result to the inference device, so that the inference device may send the inference output and the measurement result to the update device in a unified manner. The measurement device may not directly communicate with the update device. In other words, S1204 is not performed.

Solution 3: The measurement device may send the inference output and the measurement result to the update device, and the inference device may not communicate with the update device. In other words, only S1204 is performed, and S1203 is not performed.

For example, the sixth message sent by the inference device to the inference device may include the inference output, so that after obtaining the measurement result, the inference device may send the inference output and the measurement result to the update device in a unified manner. The inference device may not directly communicate with the update device. In other words, S1203 is not performed.

The following separately describes specific implementations of the foregoing solution 1 to solution 3.

In solution 1, S1203 may include: The inference device sends the inference output to the update device, where the inference output is carried in a seventh message. Correspondingly, the measurement result in S1204 may be carried in a ninth message.

For example, the update device may obtain the inference output by receiving the seventh message from the inference device, and obtain the measurement result by receiving the ninth message from the measurement device. For specific implementations of the seventh message and the ninth message, refer to the following method embodiment shown in FIG. 13 or FIG. 16. Details are not described herein again.

It should be noted that S1203 may be performed before S1204, or may be performed after S1204, or S1203 and S1204 may be simultaneously performed. An execution sequence of S1203 and S1204 is not limited in this embodiment of this application.

Optionally, in S1202, the sixth message may further include a transaction identifier. Correspondingly, the seventh message may further include the transaction identifier, and the ninth message may further include the transaction identifier. The transaction identifier corresponds to the inference output and the measurement result.

For example, the transaction identifier is used to identify an inference transaction of the machine learning model, that is, mark the inference output and the corresponding inference input. The inference device may send the transaction identifier to the measurement device by using the sixth message. The measurement device may establish a correspondence between the transaction identifier and the measurement result corresponding to the inference output, so that the update device may establish a correspondence between the inference output and the measurement result based on the transaction identifier in the seventh message and the transaction identifier in the ninth message. For a specific implementation of establishing the correspondence between the inference output and the measurement result based on the transaction identifier, refer to S503. Details are not described herein again.

In this way, after receiving the transaction identifier, the update device may quickly establish the correspondence between the inference output and the measurement result based on the correspondence between the transaction identifier and the inference output and the correspondence between the transaction identifier and the measurement result, thereby further improving evaluation efficiency of the machine learning model.

In a possible design solution, the seventh message may further include the inference input.

For example, the inference input may be sent by the inference device to the update device. The update device may construct a verification data set based on the inference input and the measurement result when determining that the machine learning model needs to be updated. For specific implementations of the inference input and the measurement result, refer to S1206. Details are not described herein.

Optionally, in S1202, the sixth message may further include the model identifier. Correspondingly, the seventh message may further include the model identifier, and the ninth message may further include the model identifier. For a specific implementation of the model identifier, refer to S505. Details are not described herein again.

It should be noted that, in solution 1, the sixth message in S1202 may carry the measurement object but does not carry the inference output. For a specific implementation of the measurement object, refer to S1202. Details are not described herein again.

In solution 2, S1203 may include: The inference device sends the inference output and the measurement result to the update device, where the inference output and the measurement result are carried in an eighth message. The measurement result is sent by the measurement device to the inference device.

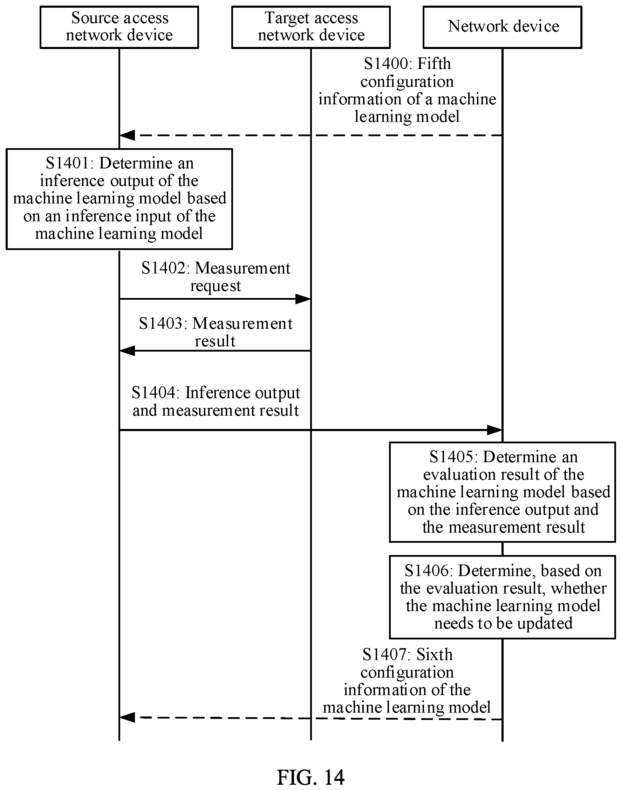

For example, after receiving the measurement result returned by the measurement device, the inference device may perform S1203, that is, the inference device sends, to the update device, the eighth message carrying the inference output and the measurement result, so that the update device may obtain the inference output and the corresponding measurement result. For a specific implementation of the eighth message, refer to the following method embodiment shown in FIG. 14 or FIG. 17. Details are not described herein again.

It should be noted that, because the inference device has sent the measurement result to the update device, the measurement device does not need to communicate with the update device, and S1204 does not need to be performed. In this way, the inference device may send the inference output and the measurement result to the update device in a unified manner, and the measurement device and the update device do not need to communicate with each other. Therefore, network resources of the measurement device and the update device can be saved, and model evaluation efficiency can be improved.

Optionally, the eighth message may further include the inference input. In this way, the update device may construct a verification data set based on the inference input and the measurement result when determining that the machine learning model needs to be updated. For specific implementations of the inference input and the measurement result, refer to S1206. Details are not described herein.

Optionally, in S1202, the eighth message may further include the model identifier. For a specific implementation of the model identifier, refer to S505. Details are not described herein again.

It should be noted that, in solution 2, the sixth message in S1202 may carry the measurement object but does not carry the inference output. For a specific implementation of the measurement object, refer to S1202. Details are not described herein again.

In solution 3, S1204 may include: The measurement device sends the inference output and the measurement result to the update device, where the inference output and the measurement result are carried in a tenth message. The inference output may be carried in the sixth message.

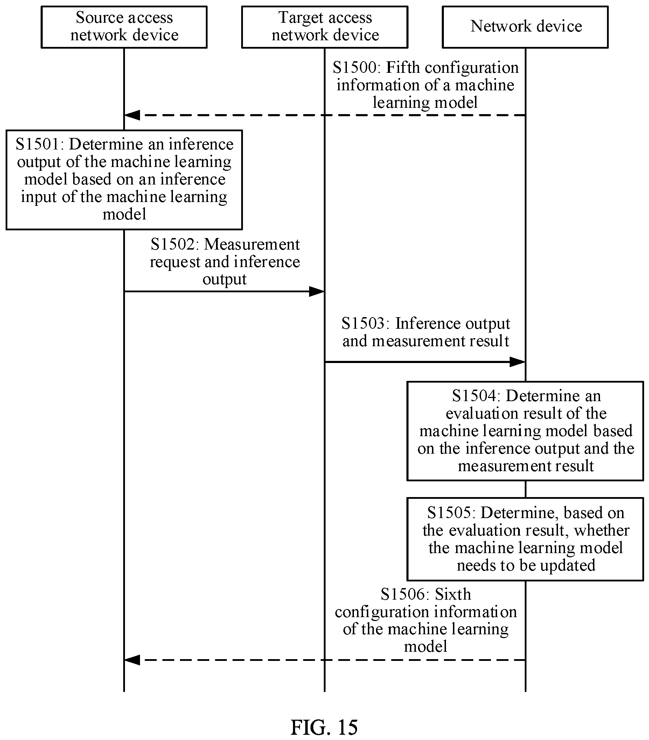

For example, after determining the measurement result, the measurement device may perform S1204, that is, the measurement device sends, to the update device, the tenth message that carries the inference output and the measurement result, so that the update device may obtain the inference output and the corresponding measurement result. For a specific implementation of the tenth message, refer to the following method embodiment shown in FIG. 15. Details are not described herein.

It should be noted that because the measurement device has sent the inference output to the update device, the inference device does not need to communicate with the update device, and S1203 does not need to be performed. In this way, the measurement device may send the inference output and the measurement result to the update device in a unified manner, and the inference device and the update device do not need to communicate with each other. Therefore, network resources of the inference device and the update device can be saved, and model evaluation efficiency can be improved.

Optionally, if the sixth message further includes the inference input in S1202, the tenth message may further include the inference input. In this way, the update device may construct a verification data set based on the inference input and the measurement result when determining that the machine learning model needs to be updated. For specific implementations of the inference input and the measurement result, refer to S1206. Details are not described herein.

Optionally, if the sixth message further includes the model identifier in S1202, the tenth message may further include the model identifier. For a specific implementation of the model identifier, refer to S505. Details are not described herein again.

It should be noted that, in solution 3, the sixth message in S1202 may carry the inference output but does not carry the measurement object. For a specific implementation of the inference output, refer to S1202. Details are not described herein again.

It should be further noted that when the inference device is a source access network device or an access network device, and the update device is a core network element, the inference device may send the seventh message or the eighth message to the core network element by using an NGAP message. When the measurement device is a target access network device, and the update device is a core network element, the measurement device may send the ninth message or the tenth message to the core network element by using an NGAP message. When the measurement device is a terminal device, and the update device is a core network element, the measurement device may first send the ninth message to the inference device, and then the inference device sends the ninth message to the core network element by using a non-access stratum (non-access stratum, NAS) message.

S1205: The update device determines an evaluation result based on the inference output and the measurement result.

For example, the update device may compare the inference output with the corresponding measurement result, that is, determine a difference between the inference data and the real data in the actual scenario through comparison, and then evaluate the machine learning model based on a comparison result, to obtain the evaluation result. For a specific implementation of determining the evaluation result based on the inference output and the measurement result, refer to S504. Details are not described herein again.

Specifically, the evaluation result includes accuracy of the machine learning model.

For example, the accuracy of the machine learning model may be data, for example, a correctness rate or an error rate, obtained by the measurement device through calculation based on a result of comparison between a plurality of inference outputs and corresponding measurement results. For a specific implementation of the accuracy of the machine learning model, refer to S504. Details are not described herein again.

It should be noted that for a manner in which the update device obtains the inference output and the corresponding measurement result, refer to S1203 and S1204. Details are not described herein again.

S1206: The update device determines, based on the evaluation result, whether the machine learning model needs to be updated.

For example, the update device may determine, based on the evaluation result, whether to update the machine learning model, to determine the sixth configuration information of the machine learning model when the machine learning model needs to be updated. If the evaluation result is that the machine learning model has a poor generalization capability, the update device may retrain the machine learning model by using a new data set, to determine the sixth configuration information.

The new data set may include a marked sample that is not used. For example, the new data set may be a verification data set, and the verification data set may include the inference input and the measurement result. For a specific implementation of determining the sixth configuration information based on the new data set, refer to S506. Details are not described herein again.

It should be noted that if the evaluation result is that the machine learning model has a good generalization capability, the machine learning model in the inference device does not need to be updated, and the update device does not retrain the machine learning model based on a new data set, and does not need to determine the sixth configuration information.

Specifically, if the evaluation result includes the accuracy of the machine learning model, the update device may determine the sixth configuration information based on the accuracy.

For example, the update device may alternatively determine, based on a result of comparison between the accuracy and a preset threshold, whether the machine learning model needs to be updated, and then determine the sixth configuration information of the machine learning model. For a specific implementation of determining the sixth configuration information based on the result of comparison between the accuracy and the preset threshold, refer to S506. Details are not described herein again.

S1207: The update device sends the sixth configuration information to the inference device. Correspondingly, the update device receives the sixth configuration information from the inference device.

For example, after receiving the sixth configuration information of the machine learning model, the inference device may update the machine learning model based on the sixth configuration information. For a specific implementation of the sixth configuration information, refer to the specific implementation of the second configuration information in S507. Details are not described herein again.

It should be noted that if the update device may determine, based on the evaluation result, that the machine learning model needs to be updated, and then determine the sixth configuration information of the machine learning model, the update device may send the sixth configuration information to the inference device, and may perform S1207. If the update device determines, based on the evaluation result, that the machine learning model does not need to be updated, that is, the sixth configuration information does not need to be determined, the update device does not need to send the sixth configuration information to the inference device, and may not perform S1207. In other words, S1207 is an optional step.

According to the foregoing steps in this embodiment, the machine learning model of the inference device is evaluated by using the update device, so that data processing pressure of the inference device and the measurement device can be reduced, thereby improving model evaluation and model update efficiency. Further, resources in the inference device, the measurement device, and the update device are properly allocated, so that the devices can use remaining resources to perform other tasks, thereby improving network resource utilization and overall working efficiency.

The following uses the communication system shown in FIG. 2 as an example to describe in detail specific implementation of the model evaluation method in embodiments of this application in the communication system.

For example, FIG. 13 is a schematic flowchart 7 of a model evaluation method according to an embodiment of this application. The model evaluation method is applicable to the communication system shown in FIG. 2, to specifically implement the model evaluation method shown in FIG. 12.

The inference device shown in FIG. 12 may be a source access network device shown in FIG. 13. The measurement device shown in FIG. 12 may be a target access network device shown in FIG. 13. The update device shown in FIG. 12 may be a network device shown in FIG. 13.

As shown in FIG. 13, the model evaluation method may include the following S1300 to S1307.

S1300: The network device sends fifth configuration information of a machine learning model to the source access network device.

S1301: The source access network device determines an inference output of the machine learning model based on an inference input of the machine learning model.

For specific implementations of S1300 and S1301, refer to S1200 and S1201, and details are not described herein again.

S1302: The source access network device sends a measurement request to the target access network device. Correspondingly, the target access network device receives the measurement request from the source access network device.

The measurement request includes a measurement object, and the measurement request is used to request a measurement result obtained after the target access network device measures the measurement object. For a specific implementation of the measurement request, refer to S1202. Details are not described herein again.

S1303: The source access network device sends the inference output to the network device. Correspondingly, the network device receives the inference output from the source access network device.

S1304: The target access network device sends the measurement result to the network device. Correspondingly, the network device receives the measurement result from the target access network device. For a specific implementation of sending the inference output and the measurement result, refer to solution 1 in S1203 and S1204. Details are not described herein again.

It should be noted that S1303 may be performed before S1304, or may be performed after S1304, or S1303 and S1304 may be simultaneously performed. An execution sequence of S1303 and S1304 is not limited.

S1305: The network device determines an evaluation result of the machine learning model based on the inference output and the measurement result.

S1306: The network device determines, based on the evaluation result, whether the machine learning model needs to be updated.

S1307: The network device sends sixth configuration information of the machine learning model to the source access network device.

For specific implementations of S1305 to S1307, refer to S1205 to S1207. Details are not described herein again.

According to the foregoing steps in this embodiment, the machine learning model of the source access network device is evaluated by using the network device, so that data processing pressure of the source access network device and the target access network device can be reduced, thereby improving model evaluation and model update efficiency. Further, resources in the source access network device, the target access network device, and the network device are properly allocated, so that the devices can use remaining resources to perform other tasks, thereby improving network resource utilization and overall working efficiency.

For example, FIG. 14 is a schematic flowchart 8 of a model evaluation method according to an embodiment of this application. The model evaluation method is applicable to the communication system shown in FIG. 2, to specifically implement the model evaluation method shown in FIG. 12.

The inference device shown in FIG. 12 may be a source access network device shown in FIG. 14. The measurement device shown in FIG. 12 may be a target access network device shown in FIG. 14. The update device shown in FIG. 12 may be a network device shown in FIG. 14.

As shown in FIG. 14, the model evaluation method may include the following S1400 to S1407.

S1400: The network device sends fifth configuration information of a machine learning model to the source access network device.

S1401: The source access network device determines an inference output of the machine learning model based on an inference input of the machine learning model.

S1402: The source access network device sends a measurement request to the target access network device. Correspondingly, the target access network device receives the measurement request from the source access network device. The measurement request includes a measurement object, and the measurement request is used to request a measurement result obtained after the target access network device measures the measurement object.

For specific implementations of S1400 to S1402, refer to S1200 to S1202. Details are not described herein again.

S1403: The target access network device sends the measurement result to the source access network device.

S1404: The source access network device sends the inference output and the measurement result to the network device. Correspondingly, the network device receives the inference output and the measurement result from the source access network device. For a specific implementation of sending the inference output and the measurement result, refer to solution 2 in S1203 and S1204. Details are not described herein again.

S1405: The network device determines an evaluation result of the machine learning model based on the inference output and the measurement result.

S1406: The network device determines, based on the evaluation result, whether the machine learning model needs to be updated.

S1407: The network device sends sixth configuration information of the machine learning model to the source access network device.

For specific implementations of S1405 to S1407, refer to S1205 to S1207. Details are not described herein again.

According to the foregoing steps in this embodiment, the source access network device may send the inference output and the measurement result to the network device in a unified manner, and the target access network device does not need to communicate with the network device. Therefore, network resources of the target access network device and the network device can be saved, and model evaluation efficiency can be improved.

For example, FIG. 15 is a schematic flowchart 9 of a model evaluation method according to an embodiment of this application. The model evaluation method is applicable to the communication system shown in FIG. 2, to specifically implement the model evaluation method shown in FIG. 12.

The inference device shown in FIG. 12 may be a source access network device shown in FIG. 15. The measurement device shown in FIG. 12 may be a target access network device shown in FIG. 15. The update device shown in FIG. 12 may be a network device shown in FIG. 15.

As shown in FIG. 15, the model evaluation method may include the following S1500 to S1506.

S1500: The network device sends fifth configuration information of a machine learning model to the source access network device.

S1501: The source access network device determines an inference output of the machine learning model based on an inference input of the machine learning model.

For specific implementations of S1500 and S1501, refer to S1300 and S1301. Details are not described herein again.

51502: The source access network device sends a measurement request and the inference output to the target access network device. Correspondingly, the target access network device receives the measurement request and the inference output from the source access network device.

The measurement request is used to request a measurement device to measure a measurement object corresponding to the inference output. For specific implementations of the measurement request and the inference output, refer to S1202. Details are not described herein again.

51503: The target access network device sends the inference output and a measurement result to the network device. Correspondingly, the network device receives the inference output and the measurement result from the target access network device.

For a specific implementation of sending the inference output and the measurement result, refer to solution 3 in S1203 and S1204. Details are not described herein again.

S1504: The network device determines an evaluation result of the machine learning model based on the inference output and the measurement result.

S1505: The network device determines, based on the evaluation result, whether the machine learning model needs to be updated.

S1506: The network device sends sixth configuration information of the machine learning model to the source access network device.

For specific implementations of S1504 to S1506, refer to S1205 to S1207. Details are not described herein again.

According to the foregoing steps in this application, the target access network device may send the inference output and the measurement result to the network device in a unified manner, and the source access network device does not need to communicate with the network device. Therefore, network resources of the source access network device and the network device can be saved, and model evaluation efficiency can be improved.

The following uses the communication system shown in FIG. 3 as an example to describe in detail specific implementation of the model evaluation method in embodiments of this application in the communication system.

For example, FIG. 16 is a schematic flowchart 10 of a model evaluation method according to an embodiment of this application. The model evaluation method is applicable to the communication system shown in FIG. 3, to specifically implement the model evaluation method shown in FIG. 12.

The inference device shown in FIG. 12 may be an access network device shown in FIG. 16. The measurement device shown in FIG. 12 may be a terminal device shown in FIG. 16. The update device shown in FIG. 12 may be a network device shown in FIG. 16.

As shown in FIG. 16, the model evaluation method may include the following S1600 to S1607.

S1600: The network device sends fifth configuration information of a machine learning model to the access network device.

S1601: The access network device determines an inference output of the machine learning model based on an inference input of the machine learning model.

S1602: The access network device sends a measurement request to the terminal device. Correspondingly, the terminal device receives the measurement request from the access network device. The measurement request includes a measurement object, and the measurement request is used to request a measurement result obtained after the target access network device measures the measurement object.

For specific implementations of S1600 to S1602, refer to S1300 to S1302. Details are not described herein again.

S1603: The access network device sends the inference output to the network device. Correspondingly, the network device receives the inference output from the access network device.

S1604: The terminal device sends the measurement result to the network device. Correspondingly, the network device receives the measurement result from the terminal device. For a specific implementation of sending the inference output and the measurement result, refer to solution 1 in S1203 and S1204. Details are not described herein again.

It should be noted that S1603 may be performed before S1604, or may be performed after S1604, or S1603 and S1604 may be simultaneously performed. An execution sequence of S1603 and S1604 is not limited.

S1605: The network device determines an evaluation result of the machine learning model based on the inference output and the measurement result.

S1606: The network device determines, based on the evaluation result, whether the machine learning model needs to be updated.

S1607: The network device sends sixth configuration information of the machine learning model to the access network device.

For specific implementations of S1605 to S1607, refer to S1205 to S1207. Details are not described herein again.

According to the foregoing steps in this application, the machine learning model of the access network device is evaluated by using the network device, so that data processing pressure of the access network device and the terminal device can be reduced, thereby improving model evaluation and model update efficiency. Further, resources in the access network device, the terminal device, and the network device are properly allocated, so that the devices can use remaining resources to perform other tasks, thereby improving network resource utilization and overall working efficiency.

For example, FIG. 17 is a schematic flowchart 11 of a model evaluation method according to an embodiment of this application. The model evaluation method is applicable to the communication system shown in FIG. 3, to specifically implement the model evaluation method shown in FIG. 12.

The inference device shown in FIG. 12 may be an access network device shown in FIG. 17. The measurement device shown in FIG. 12 may be a terminal device shown in FIG. 17. The update device shown in FIG. 12 may be a network device shown in FIG. 17.

As shown in FIG. 17, the model evaluation method may include the following S1700 to S1707.

S1700: The network device sends fifth configuration information of a machine learning model to the access network device.

S1701: The access network device determines an inference output of the machine learning model based on an inference input of the machine learning model.

S1702: The access network device sends a measurement request to the terminal device. Correspondingly, the terminal device receives the measurement request from the access network device.

The measurement request includes a measurement object, and the measurement request is used to request a measurement result obtained after the target access network device measures the measurement object.

For specific implementations of S1700 to S1702, refer to S1200 to S1202. Details are not described herein again.

S1703: The terminal device sends the measurement result to the access network device.

S1704: The access network device sends the inference output and the measurement result to the network device. Correspondingly, the network device receives the inference output and the measurement result from the access network device.

For a specific implementation of sending the inference output and the measurement result, refer to solution 2 in S1203 and S1204. Details are not described herein again.

S1705: The network device determines an evaluation result of the machine learning model based on the inference output and the measurement result.

S1706: The network device determines, based on the evaluation result, whether the machine learning model needs to be updated.

S1707: The network device sends sixth configuration information of the machine learning model to the access network device.

For specific implementations of S1705 to S1707, refer to S1205 to S1207. Details are not described herein again.

In this way, the access network device may send the inference output and the measurement result to the network device in a unified manner, and the terminal device does not need to communicate with the network device. Therefore, network resources of the terminal device and the network device can be saved, and model evaluation efficiency can be improved.

According to the foregoing steps in this application, the access network device may send the inference output and the measurement result to the network device in a unified manner, and the terminal device does not need to communicate with the network device. Therefore, network resources of the terminal device and the network device can be saved, and model evaluation efficiency can be improved.

Based on the model evaluation method shown in any one of FIG. 12 to FIG. 17, the update device determines, by comparing the inference output with an actual measurement result corresponding to the inference output, whether the machine learning model can obtain an accurate output based on new data in an actual scenario, to accurately evaluate a generalization capability of the machine learning model. This can resolve a problem that evaluation is inaccurate when a same preset data set is used for both model evaluation and model training, so that a fourth configuration file of the machine learning model can be determined in a timely manner based on the evaluation result from an inference device to perform model update.

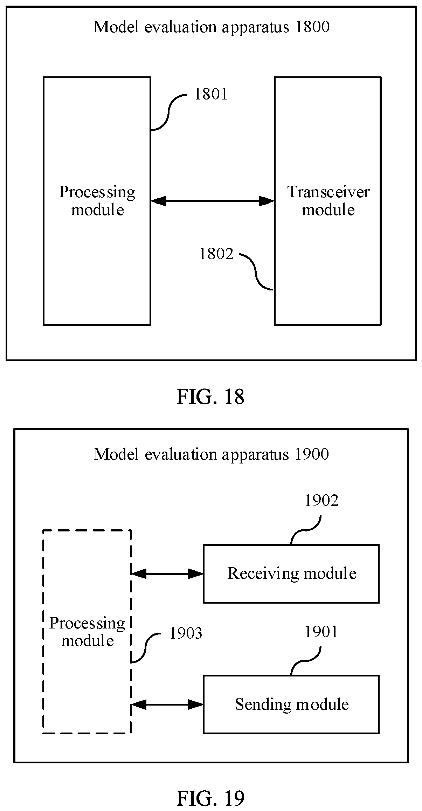

The model evaluation method provided in embodiments of this application is described in detail above with reference to FIG. 5 to FIG. 17. With reference to FIG. 18 to FIG. 20, the following describes in detail a model evaluation apparatus configured to perform the model evaluation method provided in embodiments of this application.

For example, FIG. 18 is a schematic diagram 1 of a structure of a model evaluation apparatus according to an embodiment of this application. As shown in FIG. 18, the model evaluation apparatus 1800 includes a processing module 1801 and a transceiver module 1802.

In some embodiments, the model evaluation apparatus 1800 is applicable to the model evaluation system shown in FIG. 1 and may be configured to perform a function of the inference device in the model evaluation method shown in FIG. 5, or is applicable to the communication system shown in FIG. 2 and may be configured to perform a function of the source access network device in the model evaluation method shown in FIG. 8, or is applicable to the communication system shown in FIG. 3 and may be configured to perform a function of the access network device in the model evaluation method shown in FIG. 9.

The processing module 1801 is configured to determine an inference output of a machine learning model based on an inference input of the machine learning model, where the machine learning model is determined based on first configuration information.

The transceiver module 1802 is configured to send a first message to a measurement device, where the first message includes a measurement object or the inference output, the measurement object is determined based on the inference output, and the first message is used to request a measurement result of the measurement object.

The transceiver module 1802 is further configured to receive the measurement result from the measurement device, where the measurement result corresponds to the inference output.

The transceiver module 1802 is further configured to send an evaluation result to an update device, where the evaluation result is determined based on the inference output and the measurement result.

Optionally, the evaluation result may include accuracy of the machine learning model.

Optionally, the measurement result may be included in a second message, the first message may further include a transaction identifier, and the second message may further include the transaction identifier. The transaction identifier corresponds to the measurement result.

Optionally, the evaluation result is carried in a third message, and the third message further includes the inference input and the measurement result.

In a possible design solution, an inference device may be a source access network device, the measurement device may be a target access network device, and the update device may be a network device. Correspondingly, the transceiver module 1802 is further configured to send the first message to the target access network device. The transceiver module 1802 is further configured to receive the measurement result from the target access network device. The processing module 1801 is further configured to control the transceiver module 1802 to send the evaluation result to the network device.

In another possible design solution, an inference device may be an access network device, the measurement device may be a terminal device, and the update device may be a network device. Correspondingly, the transceiver module 1802 is further configured to send the first message to the terminal device. The transceiver module 1802 is further configured to receive the measurement result from the terminal device. The transceiver module 1802 is further configured to send the evaluation result to the network device.

Optionally, the transceiver module 1802 may include a receiving module and a sending module (not separately shown in FIG. 18). The receiving module and the sending module are respectively configured to implement a receiving function and a sending function of the model evaluation apparatus 1800.

Optionally, the model evaluation apparatus 1800 may further include a storage module (not shown in FIG. 18). The storage module stores a program or instructions. When the processing module 1801 executes the program or the instructions, the model evaluation apparatus 1800 is enabled to perform the model evaluation method shown in any one of FIG. 5 or FIG. 8 and FIG. 9.

It should be noted that the model evaluation apparatus 1800 may be the inference device shown in FIG. 5, the source access network device shown in FIG. 8, the access network device shown in FIG. 9, a chip (system) or another part or component that can be disposed in the inference device, the source access network device, or the access network device, or an apparatus including the inference device, the source access network device, or the access network device. This is not limited in this application.

In addition, for technical effects of the model evaluation apparatus 1800, refer to the technical effects of the model evaluation method shown in any one of FIG. 5 or FIG. 8 and FIG. 9. Details are not described herein again.

For example, FIG. 19 is a schematic diagram 2 of a structure of a model evaluation apparatus according to an embodiment of this application. As shown in FIG. 19, the model evaluation apparatus 1900 includes a sending module 1901 and a receiving module 1902.

In some other embodiments, the model evaluation apparatus 1900 is applicable to the model evaluation system shown in FIG. 1 and may be configured to perform a function of the measurement device in the model evaluation method shown in FIG. 5, or is applicable to the communication system shown in FIG. 2 and may be configured to perform a function of the target access network device in the model evaluation method shown in FIG. 8, or is applicable to the communication system shown in FIG. 3 and may be configured to perform a function of the terminal device in the model evaluation method shown in FIG. 9.

The receiving module 1902 is configured to receive a first message from an inference device, where the first message includes a measurement object or an inference output of a machine learning model. The inference output is used to determine the measurement object.

The sending module 1901 is configured to send a measurement result to the inference device, where the measurement result is determined based on the measurement object.

Optionally, the measurement result may be carried in a second message, the first message may further include a transaction identifier, the second message may further include the transaction identifier, and the transaction identifier corresponds to the measurement result.

In a possible design solution, a measurement device may be a target access network device, and the inference device may be a source access network device. Correspondingly, the receiving module 1902 is configured to receive the first message from the source access network device. The sending module 1901 is configured to send the measurement result to the source access network device.

In another possible design solution, a measurement device may be a terminal device, and the inference device may be an access network device. Correspondingly, the receiving module 1902 is further configured to receive the first message from the access network device. The sending module 1901 is configured to send the measurement result to the access network device.

Optionally, the sending module 1901 and the receiving module 1902 may be integrated into one module, for example, a transceiver module. The transceiver module is configured to implement a sending function and a receiving function of the model evaluation apparatus 1900.

Optionally, the model evaluation apparatus 1900 may further include a processing module 1903 (shown by a dashed-line box in FIG. 19) and a storage module (not shown in FIG. 19). The storage module stores a program or instructions. When the processing module 1903 executes the program or the instructions, the model evaluation apparatus 1900 is enabled to perform the model evaluation method shown in any one of FIG. 5 or FIG. 8 and FIG. 9.

It should be noted that the model evaluation apparatus 1900 may be the measurement device shown in FIG. 5, the target access network device shown in FIG. 8, the terminal device shown in FIG. 9, a chip (system) or another part or component that can be disposed in the measurement device, the target access network device, or the terminal device, or an apparatus including the measurement device, the target access network device, or the terminal device. This is not limited in this application.

In addition, for technical effects of the model evaluation apparatus 1900, refer to the technical effects of the model evaluation method shown in any one of FIG. 5 or FIG. 8 and FIG. 9. Details are not described herein again.

In some other embodiments, the model evaluation apparatus 1800 is applicable to the model evaluation system shown in FIG. 1 and may be configured to perform a function of the update device in the model evaluation method shown in FIG. 5, or is applicable to the communication system shown in FIG. 2 and may be configured to perform a function of the network device in the model evaluation method shown in FIG. 8, or is applicable to the communication system shown in FIG. 3 and may be configured to perform a function of the network device in the model evaluation method shown in FIG. 9.

The transceiver module 1802 is configured to receive an evaluation result of a machine learning model from an inference device.

The processing module 1801 is configured to determine second configuration information of the machine learning model based on the evaluation result.

Optionally, the evaluation result may include accuracy of the machine learning model, and the accuracy is used to determine the second configuration information.

Optionally, the evaluation result may be carried in a third message. The third message may further include an inference input and a measurement result, and the inference input and the measurement result are used to determine the second configuration information.

In a possible design solution, an update device may be a network device, and the inference device may be a source access network device. Correspondingly, the transceiver module 1802 is configured to receive the evaluation result from the source access network device.

In another possible design solution, an update device may be a network device, and the inference device may be an access network device. Correspondingly, the transceiver module 1802 is configured to receive the evaluation result from the access network device.

Optionally, the transceiver module 1802 may include a receiving module and a sending module (not separately shown in FIG. 18). The receiving module and the sending module are respectively configured to implement a receiving function and a sending function of the model evaluation apparatus 1800.

Optionally, the model evaluation apparatus 1800 may further include a storage module (not shown in FIG. 18). The storage module stores a program or instructions. When the processing module 1801 executes the program or the instructions, the model evaluation apparatus 1800 is enabled to perform the model evaluation method shown in any one of FIG. 5 or FIG. 8 and FIG. 9.

It should be noted that the model evaluation apparatus 1800 may be the update device shown in FIG. 5, the network device shown in FIG. 8 and FIG. 9, a chip (system) or another part or component that can be disposed in the update device or the network device, or an apparatus including the update device or the network device. This is not limited in this application.

In addition, for technical effects of the model evaluation apparatus 1800, refer to the technical effects of the model evaluation method shown in any one of FIG. 5 or FIG. 8 and FIG. 9. Details are not described herein again.

In some embodiments, the model evaluation apparatus 1800 is applicable to the model evaluation system shown in FIG. 1 and may be configured to perform a function of the inference device in the model evaluation method shown in FIG. 10, or is applicable to the communication system shown in FIG. 2 and may be configured to perform a function of the source access network device in the model evaluation method shown in FIG. 11.

The processing module 1801 is configured to determine an inference output of a machine learning model based on an inference input of the machine learning model, where the machine learning model is determined based on third configuration information. The transceiver module 1802 is configured to send a fourth message to a measurement device, where the fourth message includes the inference output.

Optionally, the fourth message may further include the inference input.

In a possible design solution, an inference device may be a source access network device, and the measurement device may be a target access network device. Correspondingly, the transceiver module 1802 is configured to send the fourth message to the target access network device.

Optionally, the transceiver module 1802 may include a receiving module and a sending module (not separately shown in FIG. 18). The receiving module and the sending module are respectively configured to implement a receiving function and a sending function of the model evaluation apparatus 1800.

Optionally, the model evaluation apparatus 1800 may further include a storage module (not shown in FIG. 18). The storage module stores a program or instructions. When the processing module 1801 executes the program or the instructions, the model evaluation apparatus 1800 is enabled to perform the model evaluation method shown in FIG. 10 or FIG. 11.

It should be noted that the model evaluation apparatus 1800 may be the inference device shown in FIG. 10, the source access network device shown in FIG. 11, a chip (system) or another part or component that can be disposed in the inference device or the source access network device, or an apparatus including the inference device or the source access network device. This is not limited in this application.

In addition, for technical effects of the model evaluation apparatus 1800, refer to the technical effects of the model evaluation method shown in FIG. 10 or FIG. 11. Details are not described herein again.

In some embodiments, the model evaluation apparatus 1900 is applicable to the model evaluation system shown in FIG. 1 and may be configured to perform a function of the measurement device in the model evaluation method shown in FIG. 10, or is applicable to the communication system shown in FIG. 2 and may be configured to perform a function of the target access network device in the model evaluation method shown in FIG. 11.

The receiving module 1902 is configured to receive a fourth message from an inference device, where the fourth message includes an inference output of a machine learning model, and the inference output is used to determine a measurement object.

The sending module 1901 is configured to send an evaluation result to an update device, where the evaluation result is determined based on the inference output and a measurement result, the measurement result is determined based on the measurement object, and the measurement result corresponds to the inference output.

Optionally, the evaluation result may include accuracy of the machine learning model.

Optionally, the evaluation result may be carried in a fifth message, the fourth message may further include an inference input of the machine learning model, and the fifth message may further include the inference input and the measurement result.

In a possible design solution, a measurement device may be a target access network device, the inference device may be a source access network device, and the update device may be a network device. Correspondingly, the receiving module 1902 is configured to receive the fourth message from the source access network device.

Optionally, the sending module 1901 and the receiving module 1902 may be integrated into one module, for example, a transceiver module. The transceiver module is configured to implement a sending function and a receiving function of the model evaluation apparatus 1900.

Optionally, the model evaluation apparatus 1900 may further include a processing module 1903 (shown by a dashed-line box in FIG. 19) and a storage module (not shown in FIG. 19). The storage module stores a program or instructions. When the processing module 1903 executes the program or the instructions, the model evaluation apparatus 1900 is enabled to perform the model evaluation method shown in FIG. 10 or FIG. 11.

It should be noted that the model evaluation apparatus 1900 may be the measurement device shown in FIG. 10, the target access network device shown in FIG. 11, a chip (system) or another part or component that can be disposed in the measurement device or the target access network device, or an apparatus including the measurement device or the target access network device. This is not limited in this application.

In addition, for technical effects of the model evaluation apparatus 1900, refer to the technical effects of the model evaluation method shown in FIG. 10 or FIG. 11. Details are not described herein again.

In some embodiments, the model evaluation apparatus 1800 is applicable to the model evaluation system shown in FIG. 1 and may be configured to perform a function of the update device in the model evaluation method shown in FIG. 10, or is applicable to the communication system shown in FIG. 2 and may be configured to perform a function of the network device in the model evaluation method shown in FIG. 11.

The transceiver module 1802 is configured to receive an evaluation result of a machine learning model from a measurement device. The processing module 1801 is configured to determine fourth configuration information of the machine learning model based on the evaluation result.

Optionally, the evaluation result may include accuracy of the machine learning model, and the accuracy is used to determine the fourth configuration information.

Optionally, the evaluation result may be carried in a fifth message. The fifth message may further include an inference input and a measurement result, and the inference input and the measurement result are used to determine the fourth configuration information.

In a possible design solution, an update device may be a network device, and the measurement device may be a target access network device. Correspondingly, the transceiver module 1802 is configured to receive the evaluation result from the target access network device.

Optionally, the transceiver module 1802 may include a receiving module and a sending module (not separately shown in FIG. 18). The receiving module and the sending module are respectively configured to implement a receiving function and a sending function of the model evaluation apparatus 1800.

Optionally, the model evaluation apparatus 1800 may further include a storage module (not shown in FIG. 18). The storage module stores a program or instructions. When the processing module 1801 executes the program or the instructions, the model evaluation apparatus 1800 is enabled to perform the model evaluation method shown in FIG. 10 or FIG. 11.

It should be noted that the model evaluation apparatus 1800 may be the update device shown in FIG. 10, the network device shown in FIG. 11, a chip (system) or another part or component that can be disposed in the update device or the network device, or an apparatus including the update device or the network device. This is not limited in this application.

In addition, for technical effects of the model evaluation apparatus 1800, refer to the technical effects of the model evaluation method shown in FIG. 10 or FIG. 11. Details are not described herein again.

In some other embodiments, the model evaluation apparatus 1800 is applicable to the model evaluation system shown in FIG. 1 and may be configured to perform a function of the inference device in the model evaluation method shown in FIG. 12, or is applicable to the communication system shown in FIG. 2 and may be configured to perform a function of the source access network device in the model evaluation method shown in any one of FIG. 13 to FIG. 15, or is applicable to the communication system shown in FIG. 3 and may be configured to perform a function of the access network device in the model evaluation method shown in FIG. 16 or FIG, 17.

The processing module 1801 is configured to determine an inference output of a machine learning model based on an inference input of the machine learning model, where the machine learning model is determined based on fifth configuration information.

The transceiver module 1802 is configured to send the inference output to an update device.

The transceiver module 1802 is further configured to send a sixth message to a measurement device, where the sixth message includes the inference output or a measurement object, the measurement object is determined based on the inference output, and the sixth message is used to request a measurement result of the measurement object.

In a possible design solution, the transceiver module 1802 is further configured to send a seventh message to the update device, where the seventh message includes the inference output.

Optionally, the sixth message may further include a transaction identifier, the seventh message may further include the transaction identifier, and the transaction identifier corresponds to the inference output.

Optionally, the seventh message may further include the inference input. In this way, the update device may construct a verification data set based on the inference input and the measurement result, to update configuration information of the machine learning model based on the verification data set, thereby further improving the generalization capability of the machine learning model.

In another possible design solution, the transceiver module 1802 is further used by an inference device to receive the measurement result from the measurement device. The transceiver module 1802 is further configured to send an eighth message to the update device, where the eighth message includes the inference output and the measurement result.

Optionally, the eighth message may further include the inference input.

Optionally, the sixth message may further include the inference input.

In a possible design solution, an inference device may be a source access network device, the update device may be a network device, and the measurement device may be a target access network device. Correspondingly, the transceiver module 1802 is further configured to send the seventh message to the network device. The transceiver module 1802 is further configured to send the sixth message to the target access network device.

In another possible design solution, an inference device may be an access network device, the update device may be a network device, and the measurement device may be a terminal device. Correspondingly, the transceiver module 1802 is further configured to send the seventh message to the network device. The transceiver module 1802 is further configured to send the sixth message to the terminal device.

In another possible design solution, an inference device may be a source access network device, the update device may be a network device, and the measurement device may be a target access network device. Correspondingly, the transceiver module 1802 is further configured to send the eighth message to the network device. The transceiver module 1802 is further configured to send the sixth message to the target access network device.

In another possible design solution, an inference device may be an access network device, the update device may be a network device, and the measurement device may be a terminal device. Correspondingly, the transceiver module 1802 is further configured to send the eighth message to the network device. The transceiver module 1802 is further configured to send the sixth message to the terminal device.

Optionally, the transceiver module 1802 may include a receiving module and a sending module (not separately shown in FIG. 18). The receiving module and the sending module are respectively configured to implement a receiving function and a sending function of the model evaluation apparatus 1800.

Optionally, the model evaluation apparatus 1800 may further include a storage module (not shown in FIG. 18). The storage module stores a program or instructions. When the processing module 1801 executes the program or the instructions, the model evaluation apparatus 1800 is enabled to perform the model evaluation method shown in any one of FIG. 12 to FIG. 17.

It should be noted that the model evaluation apparatus 1800 may be the inference device shown in FIG. 12, the source access network device shown in FIG. 13 to FIG. 15, the access network device shown in FIG. 16 and FIG. 17, a chip (system) or another part or component that can be disposed in the inference device, the source access network device, or the access network device, or an apparatus including the inference device, the source access network device, or the access network device. This is not limited in this application.

In addition, for technical effects of the model evaluation apparatus 1800, refer to the technical effects of the model evaluation method shown in any one of FIG. 12 to FIG. 17. Details are not described herein again.

In some other embodiments, the model evaluation apparatus 1900 is applicable to the model evaluation system shown in FIG. 1 and may be configured to perform a function of the measurement device in the model evaluation method shown in FIG. 12, or is applicable to the communication system shown in FIG. 2 and may be configured to perform a function of the target access network device in the model evaluation method shown in any one of FIG. 13 to FIG. 15, or is applicable to the communication system shown in FIG. 3 and may be configured to perform a function of the terminal device in the model evaluation method shown in FIG. 16 or FIG. 17.

The receiving module 1902 is configured to receive a sixth message from an inference device, where the sixth message includes a measurement object or an inference output of a machine learning model, and the inference output is used to determine the measurement object.

The sending module 1901 is configured to send a measurement result to an update device, where the measurement result is determined based on the measurement object.

In a possible design solution, the measurement result may be included in a ninth message.

Optionally, the sixth message may further include a transaction identifier, and the ninth message may further include the transaction identifier. The transaction identifier corresponds to the measurement result.

Optionally, the sixth message may further include an inference input of the machine learning model, and the ninth message may further include the inference input.

In another possible design solution, the measurement result may be included in a tenth message, the sixth message may include the inference output, and the tenth message may further include the inference output.

Optionally, the sixth message may further include an inference input of the machine learning model, and the tenth message may further include the inference input.

In a possible design solution, the inference device may be a source access network device, the update device may be a network device, and a measurement device may be a target access network device. Correspondingly, the receiving module 1902 is configured to receive the sixth message from the source access network device. The sending module 1901 is configured to send the measurement result to the network device.

In another possible design solution, the inference device may be an access network device, the update device may be a network device, and a measurement device may be a terminal device. Correspondingly, the receiving module 1902 is configured to receive the sixth message from the access network device. The sending module 1901 is configured to send the measurement result to the network device.

Optionally, the sending module 1901 and the receiving module 1902 may be integrated into one module, for example, a transceiver module. The transceiver module is configured to implement a sending function and a receiving function of the model evaluation apparatus according to the seventeenth aspect.

Optionally, the sending module 1901 and the receiving module 1902 may be integrated into one module, for example, a transceiver module. The transceiver module is configured to implement a sending function and a receiving function of the model evaluation apparatus 1900.

Optionally, the model evaluation apparatus 1900 may further include a processing module 1903 (shown by a dashed-line box in FIG. 19) and a storage module (not shown in FIG. 19). The storage module stores a program or instructions. When the processing module 1903 executes the program or the instructions, the model evaluation apparatus 1900 is enabled to perform the model evaluation method shown in any one of FIG. 12 to FIG. 17.

It should be noted that the model evaluation apparatus 1900 may be the measurement device shown in FIG. 12, the target access network device shown in FIG. 13 to FIG. 15, the terminal device shown in FIG. 16 and FIG. 17, a chip (system) or another part or component that can be disposed in the measurement device, the target access network device, or the terminal device, or an apparatus including the measurement device, the target access network device, or the terminal device. This is not limited in this application.

In addition, for technical effects of the model evaluation apparatus 1900, refer to the technical effects of the model evaluation method shown in any one of FIG. 12 to FIG. 17. Details are not described herein again.

In some other embodiments, the model evaluation apparatus 1800 is applicable to the model evaluation system shown in FIG. 1 and may be configured to perform a function of the update device in the model evaluation method shown in FIG. 12, or is applicable to the communication system shown in FIG. 2 and may be configured to perform a function of the network device in the model evaluation method shown in any one of FIG. 13 to FIG. 15, or is applicable to the communication system shown in FIG. 3 and may be configured to perform a function of the network device in the model evaluation method shown in FIG. 16 or FIG. 17.

The transceiver module 1802 is configured to obtain a measurement result and an inference output of a machine learning model, where the measurement result corresponds to the inference output.

The processing module 1801 is configured to determine an evaluation result based on the inference output and the measurement result.

The processing module 1801 is further configured to determine sixth configuration information of the machine learning model based on the evaluation result.

Optionally, the evaluation result may include accuracy of the machine learning model.

In a possible design solution, the transceiver module 1802 is further configured to receive a seventh message from an inference device, where the seventh message includes the inference output. The transceiver module 1802 is further configured to receive a ninth message from a measurement device, where the ninth message includes the measurement result.

Optionally, the seventh message may further include a transaction identifier, and the ninth message may further include the transaction identifier. The transaction identifier corresponds to the inference output and the measurement result.

Optionally, the seventh message may further include an inference input of the machine learning model, and/or the ninth message may further include the inference input of the machine learning model. The inference input and the measurement result are used to determine the sixth configuration information.

In another possible design solution, the transceiver module 1802 is further configured to receive an eighth message from an inference device, where the eighth message includes the inference output and the measurement result.

Optionally, the eighth message may further include an inference input of the machine learning model. The inference input and the measurement result are used to determine the sixth configuration information.

In another possible design solution, the transceiver module 1802 is further configured to receive a tenth message from a measurement device, where the tenth message includes the inference output and the measurement result.

Optionally, the tenth message may further include an inference input of the machine learning model. The inference input and the measurement result are used to determine the sixth configuration information.

In a possible design solution, an update device may be a network device, the inference device may be a source access network device, and the measurement device may be a target access network device. Correspondingly, the transceiver module 1802 is further configured to receive the seventh message from the source access network device. The transceiver module 1802 is further configured to receive the ninth message from the target access network device.

In another possible design solution, an update device may be a network device, the inference device may be an access network device, and the measurement device may be a terminal device. Correspondingly, the transceiver module 1802 is further configured to receive the seventh message from the access network device. The transceiver module 1802 is further configured to receive the ninth message from the terminal device.

In another possible design solution, an update device may be a network device, and the inference device may be a source access network device. Correspondingly, the transceiver module 1802 is further configured to receive the eighth message from the source access network device.

In another possible design solution, an update device may be a network device, and the inference device may be an access network device. Correspondingly, the transceiver module 1802 is further configured to receive the eighth message from the access network device.

In another possible design solution, an update device may be a network device, and the measurement device may be a target access network device. Correspondingly, the transceiver module 1802 is further configured to receive the tenth message from the target access network device.

Optionally, the transceiver module 1802 may include a receiving module and a sending module (not separately shown in FIG. 18). The receiving module and the sending module are respectively configured to implement a receiving function and a sending function of the model evaluation apparatus 1800.

Optionally, the model evaluation apparatus 1800 may further include a storage module (not shown in FIG. 18). The storage module stores a program or instructions. When the processing module 1801 executes the program or the instructions, the model evaluation apparatus 1800 is enabled to perform the model evaluation method shown in any one of FIG. 12 to FIG. 17.

It should be noted that the model evaluation apparatus 1800 may be the update device shown in FIG. 12, the network device shown in FIG. 13 to FIG. 15 and FIG. 16 and FIG. 17, a chip (system) or another part or component that can be disposed in the update device or the network device, or an apparatus including the update device or the network device. This is not limited in this application.

In addition, for technical effects of the model evaluation apparatus 1800, refer to the technical effects of the model evaluation method shown in any one of FIG. 12 to FIG. 17. Details are not described herein again.

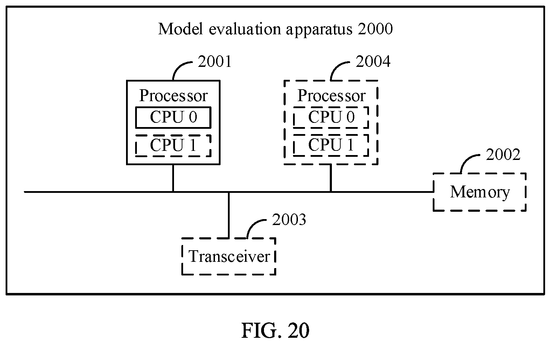

For example, FIG. 20 is a schematic diagram 3 of a structure of a model evaluation apparatus according to an embodiment of this application. The model evaluation apparatus may be a terminal device or a network device, or may be a chip (system) or another part or component that can be disposed in the terminal device or the network device. As shown in FIG. 20, the model evaluation apparatus 2000 may include a processor 2001. Optionally, the model evaluation apparatus 2000 may further include a memory 2002 and/or a transceiver 2003. The processor 2001 is coupled to the memory 2002 and the transceiver 2003, for example, through a communication bus.

The following specifically describes each component of the model evaluation apparatus 2000 with reference to FIG. 20.

The processor 2001 is a control center of the model evaluation apparatus 2000, and may be one processor, or may be a collective term of a plurality of processing elements. For example, the processor 2001 is one or more central processing units (central processing unit, CPU), or may be an application-specific integrated circuit (application specific integrated circuit, ASIC), or may be one or more integrated circuits configured to implement embodiments of this application, for example, one or more microprocessors (digital signal processor, DSP) or one or more field programmable gate arrays (field programmable gate array, FPGA).

Optionally, the processor 2001 may run or execute a software program stored in the memory 2002 and invoke data stored in the memory 2002, to perform various functions of the model evaluation apparatus 2000.

In specific implementation, in an embodiment, the processor 2001 may include one or more CPUs, for example, a CPU 0 and a CPU 1 shown in FIG. 20.

In specific implementation, in an embodiment, the model evaluation apparatus 2000 may alternatively include a plurality of processors, for example, the processor 2001 and a processor 2004 shown in FIG. 2. Each of the processors may be a single-core processor (single-CPU) or may be a multi-core processor (multi-CPU). The processor herein may be one or more devices, circuits, and/or processing cores configured to process data (for example, computer program instructions).

The memory 2002 is configured to store a software program for performing the solutions of this application, and the processor 2001 controls execution of the software program. For a specific implementation, refer to the foregoing method embodiments. Details are not described herein again.

Optionally, the memory 2002 may be a read-only memory (read-only memory, ROM) or another type of static storage device capable of storing static information and instructions, or may be a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compressed optical disc, a laser disc, an optical disc, a digital versatile disc, a Blu-ray disc, or the like), a magnetic disk storage medium or another magnetic storage device, or any other medium capable of carrying or storing expected program code in a form of an instruction or a data structure and capable of being accessed by a computer. However, this is not limited. The memory 2002 may be integrated with the processor 2001, or may exist independently and is coupled to the processor 2001 by using an interface circuit (not shown in FIG. 20) of the model evaluation apparatus 2000. This is not specifically limited in this embodiment of this application.

The transceiver 2003 is configured to communicate with another model evaluation apparatus. For example, the model evaluation apparatus 2000 is a terminal device, and the transceiver 2003 may be configured to communicate with a network device or another terminal device. For another example, the model evaluation apparatus 2000 is a network device, and the transceiver 2003 may be configured to communicate with a terminal device or another network device.

Optionally, the transceiver 2003 may include a receiver and a transmitter (not separately shown in FIG. 20). The receiver is configured to implement a receiving function, and the transmitter is configured to implement a sending function.

Optionally, the transceiver 2003 may be integrated with the processor 2001, or may exist independently and is coupled to the processor 2001 by using an interface circuit (not shown in FIG. 20) of the model evaluation apparatus 2000. This is not specifically limited in this embodiment of this application.

It should be noted that a structure of the model evaluation apparatus 2000 shown in FIG. 20 does not constitute a limitation on the model evaluation apparatus. An actual model evaluation apparatus may include more or fewer components than those shown in the figure, or combine some components, or have different component arrangements.

In addition, for technical effects of the model evaluation apparatus 2000, refer to the technical effects of the model evaluation method described in the foregoing method embodiments. Details are not described herein again.

An embodiment of this application further provides a chip system, including a processor. The processor is coupled to a memory. The memory is configured to store a program or instructions. When the program or the instructions is/are executed by the processor, the chip system is enabled to implement the method according to any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated circuit (application specific integrated circuit, ASIC), a system on a chip (system on a chip, SoC), a central processing unit (central processing unit, CPU), a network processor (network processor, NP), a digital signal processor (digital signal processor, DSP), a microcontroller unit (micro controller unit, MCU), a programmable logic device (programmable logic device, PLD), or another integrated chip.

An embodiment of this application provides a model evaluation system. The model evaluation system includes an inference device, a measurement device, and an update device.

It should be understood that, the processor in embodiments of this application may be a central processing unit (central processing unit, CPU). The processor may alternatively be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be further understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memory, RAM) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware (for example, a circuit), firmware, or any combination thereof. When software is used to implement embodiments, the foregoing embodiments may be implemented completely or partially in a form of a computer program product. The computer program product includes one or more computer instructions or computer programs. When the computer instructions or computer programs are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects, and represents that three relationships may exist. For example, A and/or B may represent the following three cases: Only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof refers to any combination of these items, including a single item (piece) or any combination of a plurality of items (pieces). For example, at least one of a, b, or c may indicate: a, b, c, a-b, a-c, b-c, or a-b-c, where a, b, and c may be singular or plural.

It should be understood that in embodiments of this application, sequence numbers of processes do not mean a sequence of execution. The sequence of execution of the processes should be determined according to functions and internal logic of the processes, and should not constitute any limitation on an implementation process of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are implemented by hardware or software depends on specific applications and design constraints of the technical solutions. A person skilled in the art may use different methods to implement the described functions for each particular application, but it should not be considered that the implementation goes beyond the scope of this application.

It may be clearly understood by a person skilled in the art that, for convenience and brevity of description, for a specific working process of the foregoing described system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may or may not be physical units, may be located in one place, or may be distributed on a plurality of network units. Some or all of the units may be selected according to an actual requirement to achieve the objectives of the solutions in the embodiments.

In addition, function units in embodiments of this application may be integrated into one processing unit, or each unit may exist alone physically, or two or more units may be integrated into one unit.

When the function is implemented in a form of a software function unit and sold or used as an independent product, the function may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

## Claims

1. A model evaluation method, comprising:
determining, by an inference device, an inference output of a machine learning model based on an inference input of the machine learning model, wherein the machine learning model is determined based on first configuration information;
sending, by the inference device, a first message to a measurement device, wherein the first message comprises a measurement object, the measurement object is determined based on the inference output, and the first message is used to request a measurement result of the measurement object;
receiving, by the inference device, the measurement result from the measurement device, wherein the measurement result corresponds to the inference output; and
sending, by the inference device, an evaluation result to an update device, wherein the evaluation result is determined based on the inference output and the measurement result.

2. The model evaluation method according to claim 1, wherein the evaluation result comprises accuracy of the machine learning model.

3. The model evaluation method according to claim 1 or 2, wherein the evaluation result is carried in a third message, and the third message further comprises the inference input and the measurement result.

4. The model evaluation method according to any one of claims 1 to 3, wherein the inference device is a source access network device, the measurement device is a target access network device, and the update device is a network device;
the sending, by the inference device, a first message to a measurement device comprises:
sending, by the source access network device, the first message to the target access network device;
the receiving, by the inference device, the measurement result from the measurement device comprises:
receiving, by the source access network device, the measurement result from the target access network device; and
the sending, by the inference device, an evaluation result to an update device comprises:
sending, by the source access network device, the evaluation result to the network device.

5. The model evaluation method according to any one of claims 1 to 3, wherein the inference device is an access network device, the measurement device is a terminal device, and the update device is a network device;
the sending, by the inference device, a first message to a measurement device comprises:
sending, by the access network device, the first message to the terminal device;
the receiving, by the inference device, the measurement result from the measurement device comprises:
receiving, by the access network device, the measurement result from the terminal device; and
the sending, by the inference device, an evaluation result to an update device comprises:
sending, by the access network device, the evaluation result to the network device.

6. A model evaluation method, comprising:
receiving, by a measurement device, a first message from an inference device, wherein the first message comprises a measurement object; and
sending, by the measurement device, a measurement result to the inference device, wherein the measurement result is determined based on the measurement object.

7. The model evaluation method according to claim 6, wherein the measurement result is carried in a second message, the first message further comprises a transaction identifier, the second message further comprises the transaction identifier, and the transaction identifier corresponds to the measurement result.

8. The model evaluation method according to claim 6 or 7, wherein the measurement device is a target access network device, and the inference device is a source access network device;
the receiving, by a measurement device, a first message from an inference device comprises:
receiving, by the target access network device, the first message from the source access network device; and
the sending, by the measurement device, a measurement result to the inference device comprises:
sending, by the target access network device, the measurement result to the source access network device.

9. The model evaluation method according to claim 6 or 7, wherein the measurement device is a terminal device, and the inference device is an access network device;
the receiving, by a measurement device, a first message from an inference device comprises:
receiving, by the terminal device, the first message from the access network device; and
the sending, by the measurement device, a measurement result to the inference device comprises:
sending, by the terminal device, the measurement result to the access network device.

10. A model evaluation apparatus, comprising a processing module and a transceiver module, wherein
the processing module is configured to determine an inference output of a machine learning model based on an inference input of the machine learning model, wherein the machine learning model is determined based on first configuration information;
the transceiver module is configured to send a first message to a measurement device, wherein the first message comprises the inference output or a measurement object, the measurement object is determined based on the inference output, and the first message is used to request a measurement result of the measurement object;
the transceiver module is further configured to receive the measurement result from the measurement device, wherein the measurement result corresponds to the inference output; and
the transceiver module is further configured to send an evaluation result to an update device, wherein the evaluation result is determined based on the inference output and the measurement result.

11. The model evaluation apparatus according to claim 10, wherein the evaluation result comprises accuracy of the machine learning model.

12. The model evaluation apparatus according to claim 10 or 11, wherein the evaluation result is carried in a third message, and the third message further comprises the inference input and the measurement result.

13. The model evaluation apparatus according to any one of claims 10 to 12, wherein the model evaluation apparatus is a source access network device, the measurement device is a target access network device, and the update device is a network device;
the transceiver module is further configured to send the first message to the target access network device;
the transceiver module is further configured to receive the measurement result from the target access network device; and
the transceiver module is further configured to send the evaluation result to the network device.

14. The model evaluation apparatus according to any one of claims 10 to 12, wherein the model evaluation apparatus is an access network device, the measurement device is a terminal device, and the update device is a network device;
the transceiver module is further configured to send the first message to the terminal device;
the transceiver module is further configured to receive the measurement result from the terminal device; and
the transceiver module is further configured to send the evaluation result to the network device.

15. A model evaluation apparatus, comprising a receiving module and a sending module, wherein
the receiving module is configured to receive a first message from an inference device, wherein the first message comprises a measurement object; and
the sending module is configured to send a measurement result to the inference device, wherein the measurement result is determined based on the measurement object.

16. The model evaluation apparatus according to claim 15, wherein the measurement result is carried in a second message, the first message further comprises a transaction identifier, the second message further comprises the transaction identifier, and the transaction identifier corresponds to the measurement result.

17. The model evaluation apparatus according to claim 15 or 16, wherein the model evaluation apparatus is a target access network device, and the inference device is a source access network device;
the receiving module is further configured to receive the first message from the source access network device; and
the sending module is further configured to send the measurement result to the source access network device.

18. The model evaluation apparatus according to claim 15 or 16, wherein the model evaluation apparatus is a terminal device, and the inference device is an access network device;
the receiving module is further configured to receive the first message from the access network device; and
the sending module is further configured to send the measurement result to the access network device.

19. A model evaluation apparatus, wherein the model evaluation apparatus is configured to perform the model evaluation method according to any one of claims 1 to 9.

20. A model evaluation apparatus, wherein the model evaluation apparatus comprises a processor, wherein
the processor is configured to perform the model evaluation method according to any one of claims 1 to 9.

21. A model evaluation apparatus, comprising a processor, wherein the processor is coupled to a memory; and
the processor is configured to execute a computer program stored in the memory, so that the model evaluation apparatus performs the model evaluation method according to any one of claims 1 to 9.

22. A model evaluation apparatus, comprising a processor, wherein
the processor is configured to: be coupled to a memory, and after reading instructions in the memory, perform, according to the instructions, the model evaluation method according to any one of claims 1 to 9.

23. A model evaluation apparatus, comprising a processor and a memory, wherein the memory is configured to store computer instructions, and when the processor executes the instructions, the model evaluation apparatus is enabled to perform the model evaluation method according to any one of claims 1 to 9.

24. A model evaluation apparatus, comprising a processor and an interface circuit, wherein
the interface circuit is configured to receive code instructions and transmit the code instructions to the processor; and
the processor is configured to run the code instructions to perform the method according to any one of claims 1 to 9.

25. A model evaluation apparatus, wherein the model evaluation apparatus comprises a processor and a transceiver, the transceiver is configured to exchange information between the model evaluation apparatus and another model evaluation apparatus, and the processor executes program instructions to perform the model evaluation method according to any one of claims 1 to 9.

26. A processor, wherein the processor is configured to perform the model evaluation method according to any one of claims 1 to 9.

27. A computer-readable storage medium, wherein the computer-readable storage medium comprises a computer program or instructions, and when the computer program or instructions is/are run on a computer, the computer is enabled to perform the model evaluation method according to any one of claims 1 to 9.

28. A computer program product, wherein the computer program product comprises a computer program or instructions, and when the computer program or instructions is/are run on a computer, the computer is enabled to perform the model evaluation method according to any one of claims 1 to 9.
